(19) **Europäisches Patentamt**

**European Patent Office**

**Office européen des brevets**

(11) **EP 0 755 110 B1**

(12) # EUROPEAN PATENT SPECIFICATION

(45) Date of publication and mention
of the grant of the patent:
**09.12.1998 Bulletin 1998/50**

(51) Int Cl.6: **H02K 41/025**, H02K 17/04

(21) Application number: **95111448.7**

(22) Date of filing: **20.07.1995**

(54) **Electromagnetic induction driving method and device**

Antriebsverfahren und -vorrichtung mittels magnetischer Induktion

Méthode et procédé de propulsion par induction magnétique

(84) Designated Contracting States:
**DE ES FR GB**

(43) Date of publication of application:
**22.01.1997 Bulletin 1997/04**

(73) Proprietors:
- **Arimoto, Satomi**
  **Naga-gun, Wakayama (JP)**
- **Arimoto, Kazuko**
  **Naga-gun, Wakayama (JP)**

(72) Inventor: **Arimoto, Satomi**
**Naga-gun, Wakayama (JP)**

(74) Representative:
**TER MEER STEINMEISTER & PARTNER GbR**
**Mauerkircherstrasse 45**
**81679 München (DE)**

(56) References cited:
**EP-A- 0 027 724**     **EP-A- 0 195 585**
**EP-A- 0 599 331**     **AT-B- 285 723**
**DE-U- 1 828 456**     **FR-A- 2 555 376**
**US-A- 5 203 430**

- **PATENT ABSTRACTS OF JAPAN vol. 10, no. 16**
**(E-375) 2073 22 January 1986 & JP-A-60 176 452**
**(HITACHI SEISAKUSHO KK) 10 September 1985**

**Description**

TECHNICAL FIELD

The present invention relates to electromagnetic induction driving method and devices wherein a driving force is produced by electromagnetic induction using an a.c. power source.

BACKGROUND ART

Three-phase induction motors and single-phase induction motors can be given as examples of electromagnetic induction driving devices. Such motors comprise a fixed external stator provided with coils which are equal in number to the number of phases multiplied by the number of poles, and a cage rotor. Alternating currents displaced in phase from one another are applied to the field coils to set up a rotating magnetic field or shifting magnetic field. In the case of single-phase induction motors, a capacitor is connected to the coils to displace the phase of a.c. currents. An induced current is generated in the cage rotor due to a difference in relative moving speed between the rotating magnetic field and the rotor, and an electromagnetic force in a direction determined by Fleming's left-hand rule is produced between the induced current and the rotating magnetic field to drivingly rotate the rotor.

It is known that these induction motors have the following problems.

The field coils which have a specified number of turns and which are equal in number to the number of phases multiplied by the number of poles are arranged in grooves formed in the inner surface of iron core of the stator, so that provision of the coils requires much labor. Furthermore, many kinds of motors need to be prepared in stock which correspond to the number of combinations of desired speeds of rotation and differences in the power source frequency or power source voltage which differs from district to district.

The rotational driving force includes a vibration component twice the power source frequency, such that when driven at a low speed, the motor gives off a noise.

The rotation of the rotor is transmitted to other device by means of belts, pulleys, gears or the like. This entails an impaired transmission efficiency, power losses and generation of noise.

Further with three-phase induction motors, the direction in which the rotating magnetic field is produced can be reversed by replacing two of the three phases of the power source by each other, so that the drive shaft is reversely rotatable easily, whereas the rotation of drive shaft of the single-phase induction motor can not be reversed. Accordingly, when the torque available by the motor is to be reversed, a power transmission or the like must be used to reverse the rotation of the drive shaft. This renders the device large-sized and complex. A linear induction motor is disclosed in EP-A-599 331.

SUMMARY OF THE INVENTION

The present invention provides an electromagnetic induction driving method according to claim 1 and an electromagnetic induction driving device according to claim 8 or 14.

The device of the invention comprises a drive member 4 made of electrically conductive nonmagnetic material and supported rotatably or movably straight, and an outer magnetic member 2 and an inner magnetic member 3 arranged respectively at an outer side and an inner side of the drive member which are orthogonal to the direction of movement thereof.

Closed magnetic circuits are formed for magnetic flux to pass therethrough to penetrate the drive member 4 at at least three locations between the outer and inner magnetic members 2, 3. The drive member 4 is provided, at its opposite sides orthogonal to the direction of movement, with edge portions 41, 41 not opposed to magnetic poles 22, 23, i.e., not penetrated by the flux. The magnetic fluxes passing through the respective magnetic circuits are different in phase. The phase difference of the fluxes moves the drive member 4 relative to one or both of the outer and inner magnetic members 2, 3.

The device of the present invention has the closed magnetic circuit for the flux originating from the outer magnetic member 2 to pass through the drive member 4 and then through the inner magnetic member 3, penetrate the drive member 4 again and return to the outer magnetic member 2, whereas the conventional induction motor comprising a stator and a rotor differs from the invention in that no closed magnetic circuit extends through the conductive portion of the cage rotor.

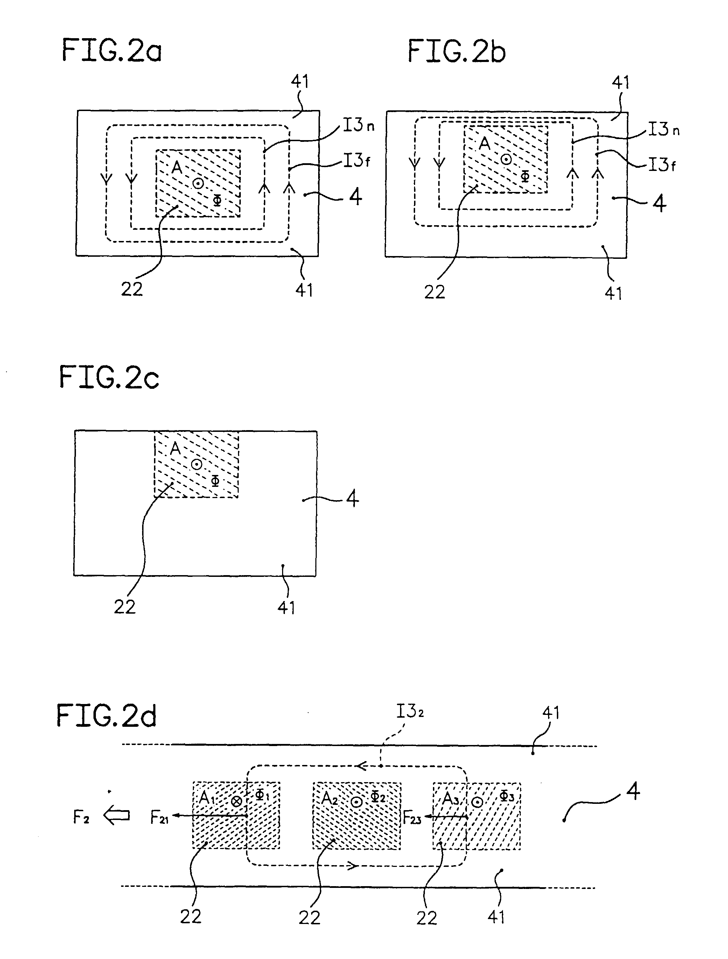

According to the present invention, the drive member 4 is disposed in gaps of the closed magnetic circuits defined by the outer magnetic member 2 and the inner magnetic member 3 opposed thereto, and at least three fluxes penetrating the drive member 4 are different from one another in phase. As shown in FIG. 2d, the fluxes penetrating the drive member induce respective currents in the plane of the drive member 4. For example, the flux $\Phi 2$ generates an induced current which flows in one edge portion 41 along the direction of movement of the drive member 4 and then across the adjacent magnetic circuit Φ3 penetrating the drive member 4, flows in the other edge portion 41 toward the opposite direction and then flows across the other magnetic circuit Φ1 penetrating the drive member 4, the current thus flowing along a round path to produce an electromagnetic force on the drive member 4 between the flux Φ2 and the induced current I32, whereby the drive member 4 is rotated or moved straight.

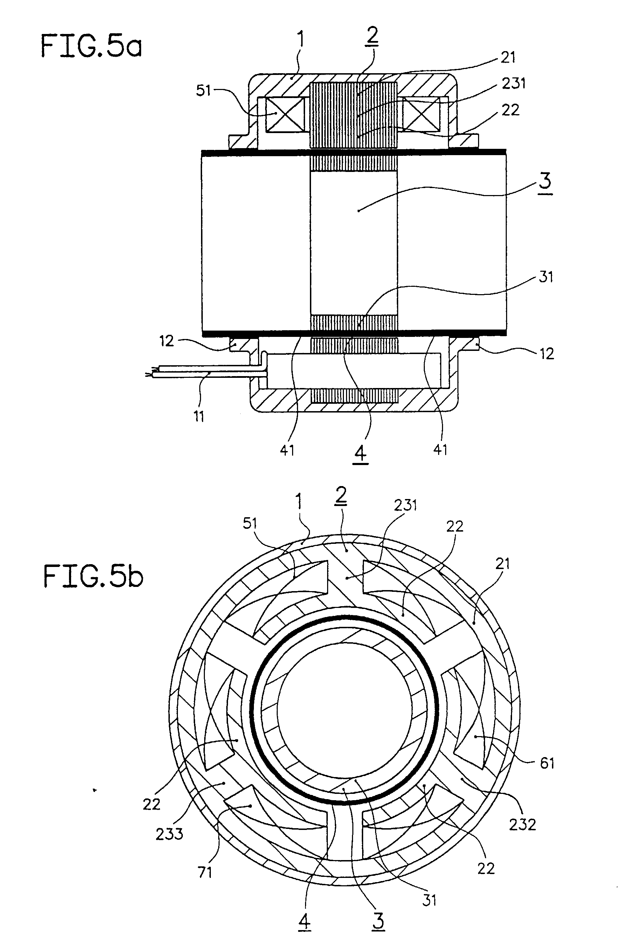

An object of the present invention is to provide a device and a method wherein an inner magnetic member 3 and a drive member 4 are formed each in the shape of a cylinder and joined together, and magnetic poles 22 are formed on an outer magnetic member 2 to rotate the inner magnetic member 3 and the drive member 4 (FIGS. 5a and 5b).

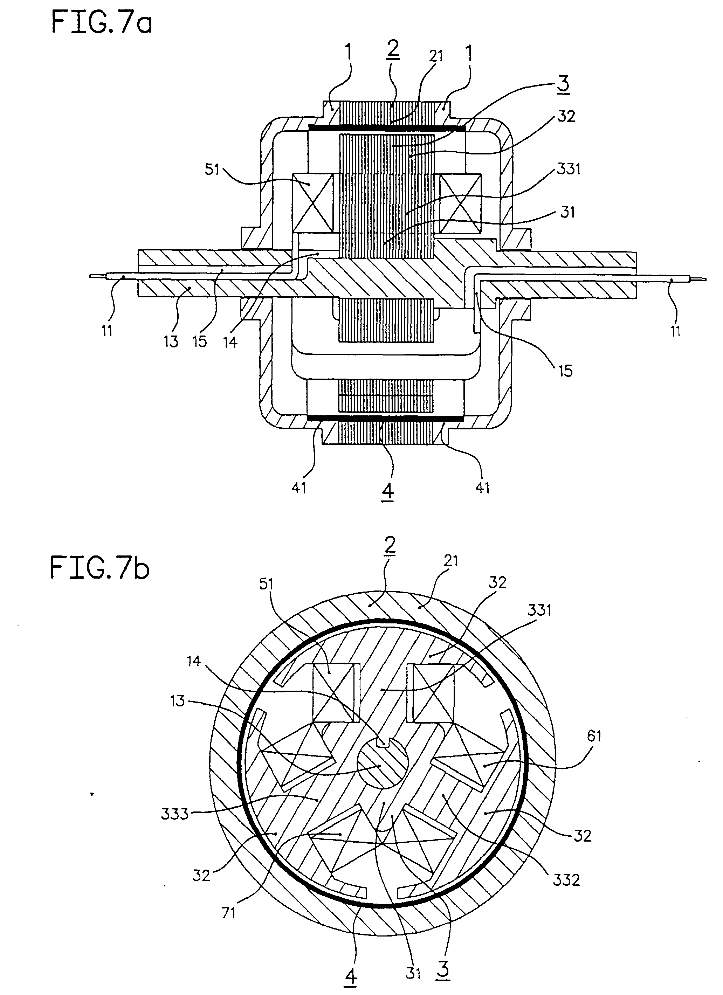

Another object of the invention is to provide a device and a method wherein an outer magnetic member 2 and a drive member 4 are formed each in the shape of a cylinder and joined together, and magnetic poles 32 are formed on an inner magnetic member 3, the outer magnetic member 2 and the drive member 4 being rotatable (FIGS. 7a and 7b).

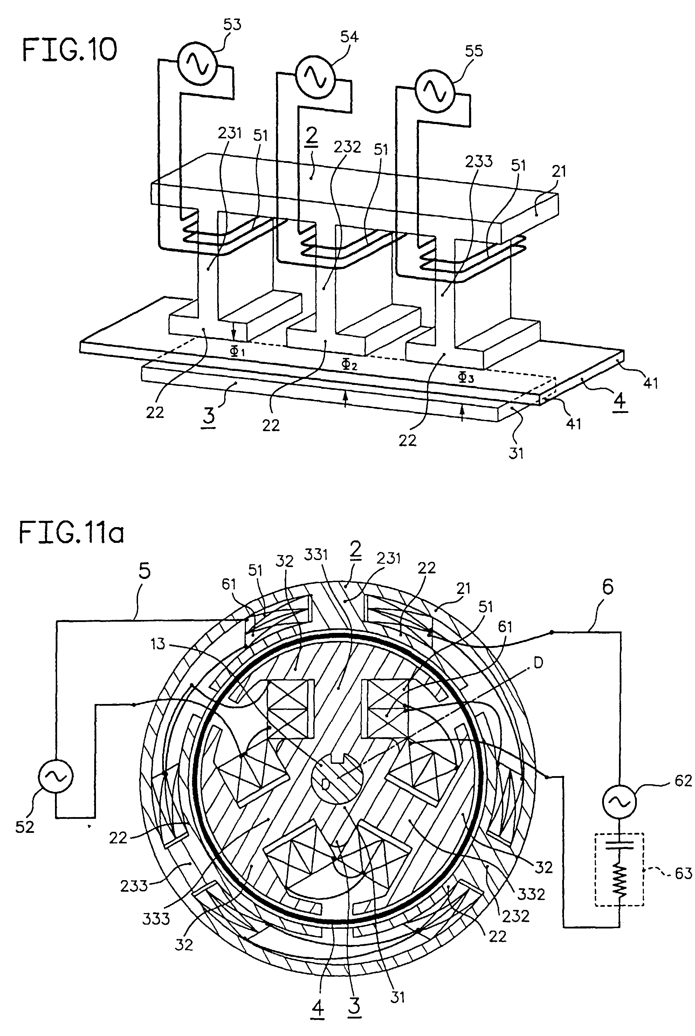

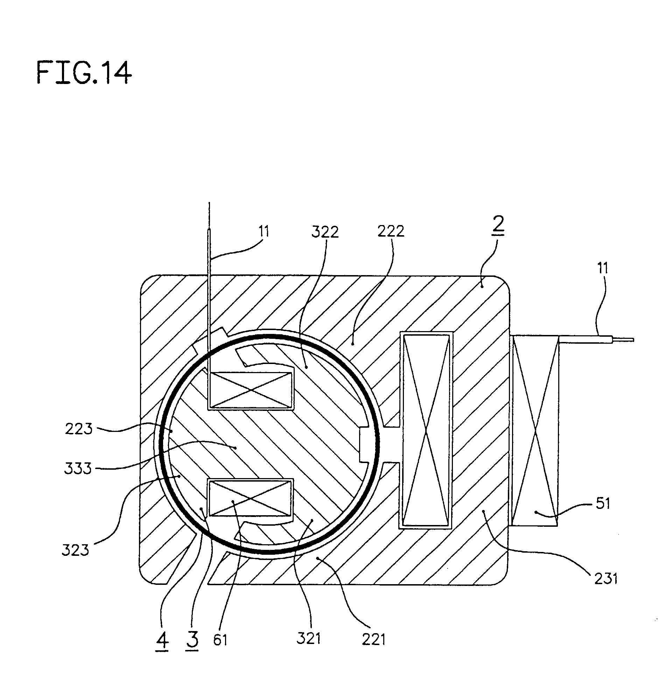

Another object of the invention is to provide a device and a method wherein a drive member 4 is formed in the shape of a cylinder, and magnetic poles are formed on outer and inner magnetic members 2, 3 and opposed respectively to the outer side and inner side of the drive member 4, the drive member 4 being drivingly rotatable (FIGS. 11a, 11b and 14).

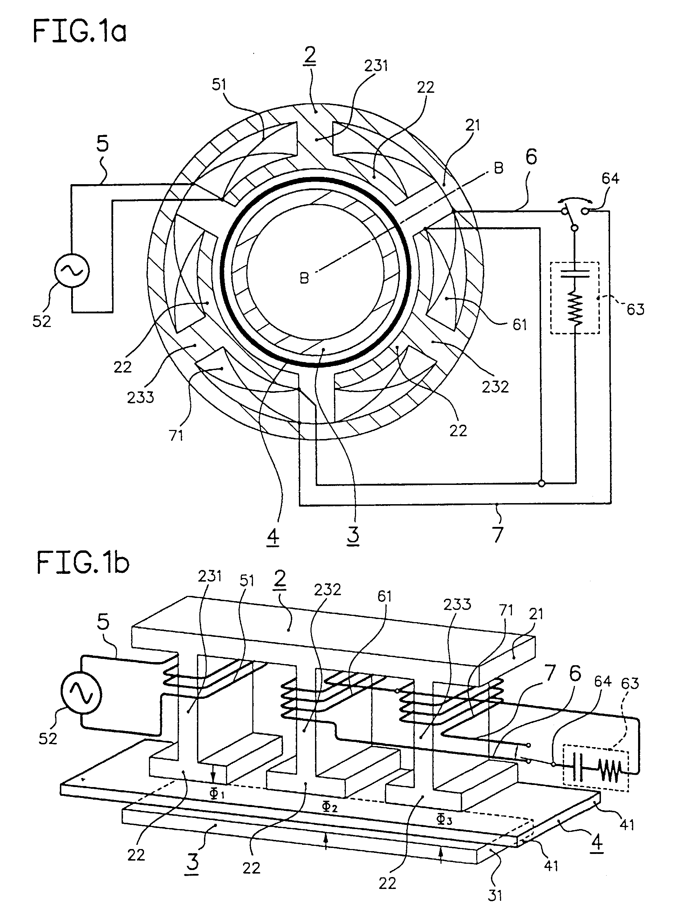

Another object of the invention is to provide a device wherein at least one of outer and inner magnetic members 2, 3 is provided with at least three magnetic poles 22, at least one of the poles being provided with a coil 51 for use in common for forward and reverse driving, the other poles being provided with a forward driving coil 61 and a reverse driving coil 71 respectively, the forward and reverse driving coil 51 being electrically connected in series with a power source 52 to constitute a closed electric circuit 5, the forward driving coil 61 and the reverse driving coil 71 being alternatively connectable in series with an electric element 63 comprising a capacitor, resistor or the combination thereof to constitute closed electric circuits 6, 7, whereby a forward or reverse phase difference is produced between magnetic fluxes penetrating a drive member 4, the invention further providing a method of producing the phase difference (FIGS. 1a and 1b).

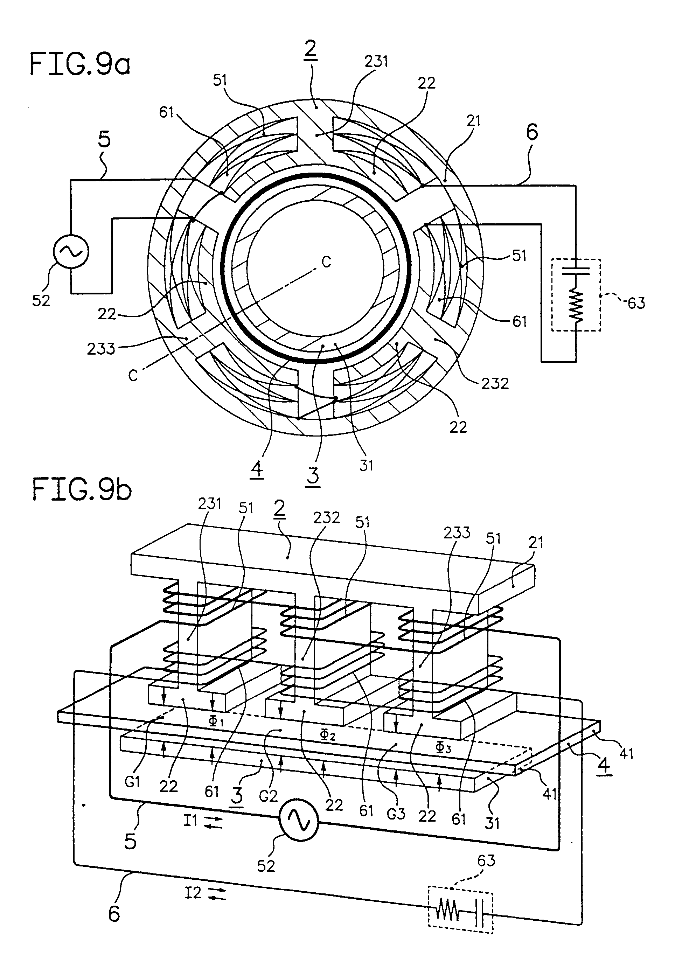

Another object of the invention is to provide a device wherein at least one of outer and inner magnetic members 2, 3 is provided with at least three magnetic poles 22 or 32, at least one of the poles being provided with a coil 51 connected in series with an a.c. power source 52 to constitute a closed electric circuit 5, at least one of the poles being provided with a coil 61 electrically connected in series with an electric element 63 comprising a capacitor, resistor or the combination thereof to constitute a closed electric circuit 6, whereby a phase difference is produced between magnetic fluxes penetrating a drive member 4, the invention further providing a method of producing the phase difference (FIGS. 9a, 9b, 11a, 11b).

Another object of the invention is to provide a device wherein at least one of outer and inner magnetic members 2, 3 has three magnetic poles 22 or 32, each of the poles being provided with a coil 51, the coils being connected to three-phase a.c. power sources 53, 54, 55, whereby a phase difference is produced between magnetic fluxes penetrating a drive member 4, the invention further providing a method of producing the phase difference.

BRIEF DESCRIPTION OF THE DRAWINGS

FIG. 1a is a diagram of an electromagnetic induction driving device embodying the invention to show a basic structure 1;

FIG. 1b is a perspective view of the device as cut along the line B-B in FIG. 1a and developed along a plane;

FIGS. 2a to 2d are diagrams illustrating the principle on which induced currents and electromagnetic forces are produced by the arrangement of a drive member 4 and magnetic poles 22;

FIGS. 3a to 3c are graphs showing variations with time of fluxes at the poles of first, second and third iron cores 231, 232, 233 and variations with time of induced currents;

FIG. 4a is a diagram illustrating the drive principle of the basic structure 1;

FIG. 4b is a perspective view of an embodiment wherein a drive member 4 is movable straight;

FIG. 4c is a perspective view of another embodiment;

FIG. 5a is a view in longitudinal section of an electromagnetic induction driving device having the basic structure 1;

FIG. 5b is a view in section taken along a plane orthogonal to the rotary shaft of the device;

FIG. 6a is a view in longitudinal section of another embodiment;

FIG. 6b is a view in section taken along a plane orthogonal to the rotary shaft of the same device;

FIG. 7a is a view in longitudinal section of another embodiment;

FIG. 7b is a view in section taken along a plane orthogonal to the rotary shaft of the device of FIG. 7a;

FIG. 8 is a sectional view of another embodiment;

FIG. 9a is a view of an electromagnetic induction driving device of the invention to show a basic structure 2, the view being in section taken along a plane orthogonal to its rotary shaft;

FIG. 9b is a perspective view of the device as cut along the line C-C in FIG. 9a and developed;

FIG. 10 is a perspective view showing the device as connected to three-phase a.c. power sources;

FIG. 11a is a view showing another electromagnetic induction driving device having the basic structure 2 of the invention, the view being in section taken along a plane orthogonal to its rotary shaft;

FIG. 11b is a perspective view of the device as cut along the line D-D in FIG. 11a and developed;

FIG. 12 is a view in vertical section of another embodiment of the basic structure 2;

FIG. 13a is a view in longitudinal section of another embodiment of the basic structure 2;

FIG. 13b is a view showing the device of FIG. 13a in section as cut by a plane along its rotary shaft;

FIG. 14 is a view in longitudinal section of another embodiment of the basic structure 2;

FIG. 15a is a view in longitudinal section of another embodiment of the basic structure 2;

FIG. 15b is a sectional view showing the device of FIG. 15a as cut by a plane along the rotary shaft of the device;

FIGS. 16a to 16f are perspective views showing embodiments of the invention for various uses; and

FIGS. 17a and 17b are perspective views showing other embodiments of the drive member 4.

## DESCRIPTION OF THE PREFERRED EMBODIMENTS

The electromagnetic induction driving device of the present invention has a basic structure 1 or a basic structure 2 depending on whether a phase difference between magnetic fluxes penetrating through a drive member 4 is produced only in the forward direction or in both forward and reverse directions. Each of these structures and embodiments having the structure will be described in detail with reference to the drawings.

## Basic Structure 1

FIG. 1a shows the basic structure 1 of the present invention. This structure is modified into various embodiments as will be described later. An outer magnetic member 2 has first to third three iron cores 231, 232, 233 projecting from a yoke 21 and each having an enlarged inner end to provide a magnetic pole 22 having a circular-arc inner face.

The first and second iron cores 231, 232 are provided with field coils 51, 61, respectively, and the third iron core 233 has a field coil 71.

The coil 51 on the first core 231 is connected to an a.c. power source 52, for example, of 60 Hz by a closed electric circuit 5 and energized.

An inner magnetic member 3 is in the form of a cylinder concentric with the arcs of the inner faces of the magnetic poles 22. A drive member 4 made of electrically conductive nonmagnetic material is disposed in a gap between the inner magnetic member 3 and the poles 22 and is freely rotatable.

The drive member 4 is in the form of a cylinder having a uniform wall thickness and has a width, i.e., a length orthogonal to the direction of rotation, which is larger than the width of the poles 22. The magnetic poles 22 are arranged as opposed approximately to the midportion of width of the drive member 4. Accordingly, the drive member 4 has at its opposite ends edge portions 41, 41 not facing the magnetic pole 22.

The coils 61, 71 on the second and third cores 232, 233 are connected together each at its one end. One of the other ends of these coils is electrically connected in series with an electric element 63 comprising a capacitor, resistor or the combination thereof by the action of a switch 64 to form a closed circuit, with the remaining end left unconnected. In the case where the coil 61 is connected to the electric element 63 by the switch 64, the magnetic flux of a magnetic circuit having the coil 61 and extending through the second core 232 and then through the drive member 4 passes through the inner magnetic member 3, penetrates the drive member again and returns to the outer magnetic member 2 via the first core 231 and the third core 233 having the respective coils 51, 71, thus forming respective magnetic circuits. Therefore, magnetic fluxes in the forward direction which are different in phase are produced at the respective poles 22.

When the coil 71 is connected to the electric element 63 by operating the switch 64, the magnetic circuit having the coil 71 which is different from the coil 61 in position produces at the poles 22 fluxes in the reverse direction which are different in phase.

For the ease of description, FIG. 1b shows the structure of FIG. 1a as cut along the line B-B in FIG. 1a and developed into an arrangement on a plane. In FIGS. 1a and 1b, like parts are referred to by like numerals.

## Drive Principle

The drive member 4 operates on the principle to be described below.

FIG. 2a shows one magnetic pole 22 as opposed to the drive member 4 of electrically conductive nonmagnetic material. When an alternating current is passed through the coil on the core of the pole, magnetic flux $\Phi$ flowing through a closed magnetic circuit including the outer and inner magnetic members 2, 3 concentrates on the pole 22 and penetrates the drive member 4. An induction current I3 in proportion to the variation in the magnetic flux $\Phi$ with time flows around the magnetic pole 22 in the plane of the drive member 4.

The reason why the induction current I3 occurs can be explained as follows. When the magnetic flux $\Phi$ through a coil which is n in the number of turns varies with time, an induction electromotive force E expressed by Eq. 1 below is generated at opposite ends of the coil as is known.

$$E = n \cdot \frac{\delta\Phi}{\delta t}$$

Eq. 1

In the plane of the drive member 4 shown in FIG. 2a, the region outside the region A thereof opposed to the magnetic pole 22 can be regarded as a coil which is 1 in the number of turns, and a current depending on Kirchhoff's second law flows. More specifically, suppose the equivalent resistance of the region outside the region A is r3. A change in the flux then produces an induced current I3.

$$I3 = -n \cdot \frac{\delta\Phi}{\delta t} / r3$$

Eq. 2

The direction of flow of the induced current I3 and the magnitude thereof alter from moment to moment in accordance with the direction of the flux and the variation in the magnitude of the flux with time. For example, in the case where the flux flows upward with respect to the plane of FIG. 2a and changes in a direction toward an increase in the flux, the induced current flows in the direction of advance of a right-hand screw according to Faraday's law.

The magnitude of the induced current I3 is in inverse proportion to the equivalent resistance r3 of the path of flow of the current through the plane of the drive member 4, so that in FIGS. 2a and 2b, the current I3n near the pole 22 is great while the current I3f far from the pole 22 is small (I3n > I3f).

Further when the pole 22 is disposed in register with the edge of the drive member 4 as shown in FIG. 2c, the induced current is unable to flow around the pole 22, hence no induced current. The induced current occurs when the drive member 4 is greater than the pole 22 in width and has its edge portions 41, 41, which are not opposed to the pole 22, positioned at opposite sides of the pole 22.

With reference to FIG. 2d, it is assumed that the magnetic poles 22 of the first to third iron cores 231, 232, 233 respectively occupy regions $A_1$, $A_2$, $A_3$ above the drive member 4. Suppose the coil 22 on the second core 232 only is energized. On the drive member 4 is then produced an induced current $I3_2$ flowing around the region $A_2$ across the region $A_1$ or $A_3$. Within the region $A_2$ immediately below the pole 22, the currents induced by adjacent fluxes offset each other, with the result that no induced current appears in this region.

FIG. 2d is a simplified diagram showing the drive member 4 and three magnetic poles 22 only of FIG. 1b. A flow of alternating current through the two coils 51, 61 causes fluxes $\Phi 1$, $\Phi 2$, changing with time, to penetrate the regions $A_1$, $A_2$.

The first core 231 is connected to a closed magnetic circuit through the inner magnetic member 3, and the second and third cores 232, 233 and yoke 21 of the outer magnetic member 2. Accordingly, the flux $\Phi 1$ produced by the coil 51 on the first core 231 passes to the inner magnetic member 3 through the pole 22 and then through the drive member 4 at the region $A_1$, and penetrates the drive member 4 as divided in two for the regions $A_2$, $A_3$. The fluxes then pass through the cores 232, 233, join at the yoke 21, and return to the some second core 232.

Similarly, the flux $\Phi 2$ produced by the coil 61 on the second core 232 passes to the inner magnetic member 3 through the pole 22 and then through the drive member 4 at the region $A_2$, and penetrates the drive member 4 as divided in two for the regions $A_1$, $A_3$. The fluxes then pass through the cores 231, 233, join at the yoke 21 and return to the same second core 232.

The third core 233 of the pole 22 opposed to the region $A_3$ has the coil 71, which, however, is unenergized and therefore produces no flux. Nevertheless, the fluxes $\Phi 1$, $\Phi 2$ produced by the coils 51, 61 on the first and second cores 231, 232 return from the inner magnetic member 3 to the outer magnetic member 2, so that divided portions of these fluxes passing through the third core 233 combine together as flux $\Phi 3$, which penetrates the drive member 4 at the region $A_3$ through the pole 22.

When the alternating current source is connected to the coil 51 on the first core 231 and the electric and magnetic circuits are suitably so conditioned that the fluxes $\Phi 1$, $\Phi 2$ are made different in phase by 120° and made to have the same magnitude by the electric element 63 incorporated in the closed electric circuit 6, the fluxes $\Phi 1$, $\Phi 2$ available are expressed as follows.

$$\Phi 1 = \Phi 0 \cdot \sin(\omega \cdot t)$$

$$\Phi 2 = \Phi 0 \cdot \sin(\omega \cdot t - 120°)$$

Eq. 3

where $\omega = 2\pi f$, and $f$ = power source frequency.

The magnetic flux $\Phi3$ through the third core 233 can be expressed as follows when the conditions for the magnetic circuit are determined suitably.

$$\Phi3 = \Phi0\cdot\sin(\omega\cdot t - 240°) \qquad\qquad \text{Eq. 4}$$

Assuming that the equivalent resistance around each of the regions $A_1$, $A_2$, $A_3$ of the drive member 4 is $r3_0$, the induced currents $I3_1$, $I3_2$, $I3_3$ produced by the fluxes $\Phi1$, $\Phi2$, $\Phi3$ are as follows.

$$
\begin{aligned}
I31 &= -\omega\cdot\phi0\cdot\cos(\omega\cdot t)/r30 \\
I32 &= -\omega\cdot\phi0\cdot\cos(\omega\cdot t - 120°)/r30 \\
I33 &= -\omega\cdot\phi0\cdot\cos(\omega\cdot t - 240°)/r30
\end{aligned}
\right\} \qquad \text{Eq. 5}
$$

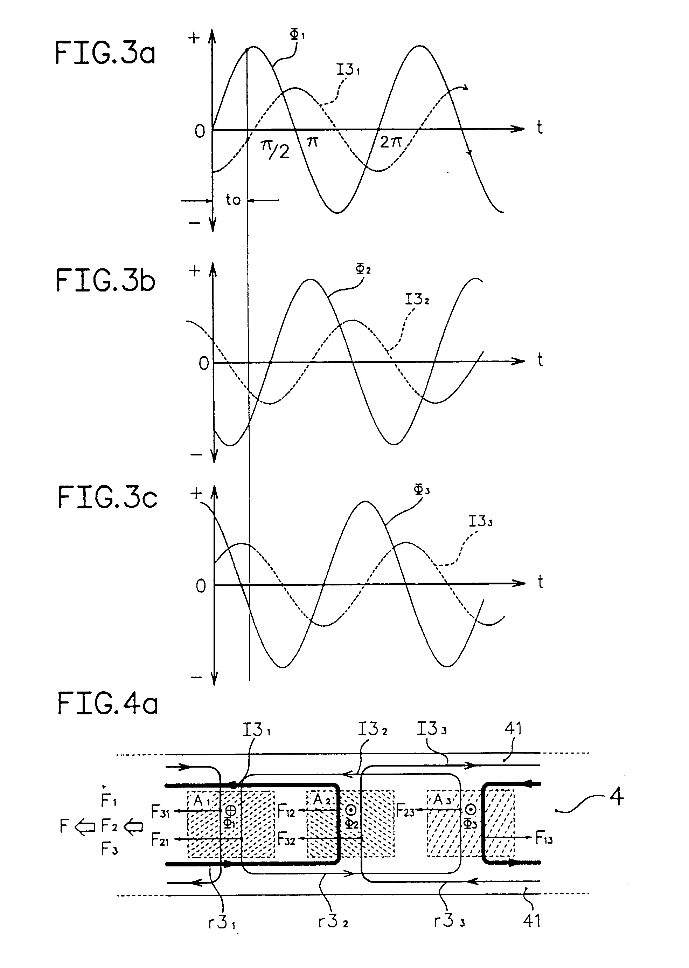

As shown in FIGS. 3a to 3c, the induced current $I_3$ has a waveform delayed by 90° in phase relative to the flux $\Phi$. At optional time $t0$, there is the relationship of $\Phi1 + \Phi2 + \Phi3 = 0$.

With reference to FIG. 2d, the flux $\Phi2$ through the second core 232 induces in the drive member 4 the current $I3_2$ flowing around the region $A_2$ and passing the regions $A_1$, $A_3$.

Since the three poles 22 are actually arranged close to one another and are so sized as to generally cover the length of the drive member 4, the current flowing through the clearances between the regions is small and almost negligible.

The flux $\Phi1$ acts on the current $I3_2$ across the region $A_1$ and applies an electromagnetic force $F_{21}$ in a direction determined by Fleming's left-hand rule. Similarly, the flux $\Phi3$ acts on the current $I3_2$ in the region $A_3$ and applies an electromagnetic force $F_{23}$. The two electromagnetic forces combine into a force $F_2$ to rotate the drive member 4 or move the member 4 straight.

The drive member 4 is a cylinder in actuality as shown in FIG. 1a, so that with reference to FIG. 4a, the flux $\Phi1$ penetrating the region $A_1$ induces the current $I3_1$ across the fluxes of the regions $A_2$, $A_3$. Similarly, the flux $\Phi3$ penetrating the region $A_3$ induces the current $I3_3$ across the fluxes of the regions $A_1$, $A_2$.

Since the currents $I3_1$, $I3_2$, $I3_3$ induced in the plane of the drive member 4 by the fluxes $\Phi1$, $\Phi2$, $\Phi3$ penetrating the respective regions $A_1$, $A_2$, $A_3$ can be superposed, the electromagnetic forces $F_1$, $F_2$, $F_3$ acting on the member 4 can also be superposed.

As previously stated, the magnetic fluxes $\Phi1$, $\Phi2$, $\Phi3$ through the three poles 22 are different in phase by 120° and have the same magnitude, while the equivalent resistances around the regions $A_1$, $A_2$, $A_3$ are set at the same value. As already described, therefore, the induced currents $I3_1$, $I3_2$, $I3_3$ in the plane of the drive member 4 are the same in magnitude and remain delayed by 90° relative to the fluxes $\Phi1$, $\Phi2$, $\Phi3$ while varying with time. Accordingly, the combined electromagnetic force $F$ resulting from superposition of the electromagnetic forces $F_1$, $F_2$, $F_3$ is given by the following equation.

$$
\begin{aligned}
F &= L0\cdot(I3_3 - I3_2)\cdot\Phi1/A0 \\
&\quad + L0\cdot(I3_1 - I3_3)\cdot\Phi2/A0 \\
&\quad + L0\cdot(I3_2 - I3_1)\cdot\Phi3/A0 \\
&= 2\cdot\omega\cdot\Phi0\cdot L0\cdot\{\sin(120°) + \sin(120°) \\
&\quad + \sin(120°)\}/(r3_0\cdot A_0) \qquad\qquad \text{Eq. 6}
\end{aligned}
$$

where L0 is the width of the magnetic pole 22 or 32, and

A0 is the cross sectional area of the pole 22 or 32. The equation indicates that the force $F$ is always definite in magnitude and direction independently of time $t$ and is free of vibration. In the case where the drive member 4 is cylindrical, the force $F$ is a rotational force acting circumferentially thereof to rotatingly move the drive member 4.

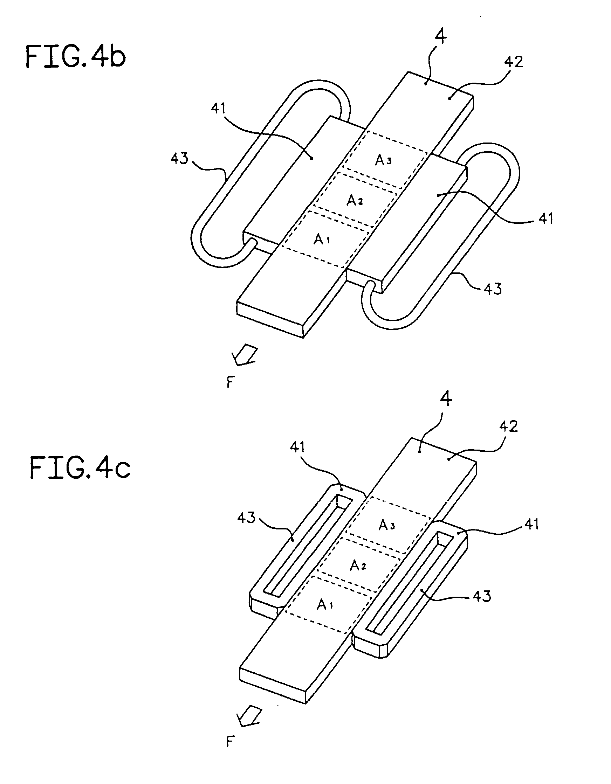

The outer magnetic member 2, inner magnetic member 3 and drive member 4 may be arranged as developed in parallel to a plane as seen in FIG. 1b. As shown in FIG. 4b in this case, a drive portion 42 between the opposite edge portions 41, 41 is separated from the drive member 4, and each edge portion 41 is connected electrically at its opposite ends to an electric circuit 43 comprising an electric wire. The drive portion 42 is made slidable along the edge portions 41, 41. In the case where the drive member 4 is in the form of a planar plate, the electromagnetic force F acts straight to move the drive member 4 straight. FIG. 4c shows an example wherein the edge portion 41 and the electric circuit 43 shown in FIG. 4b are integral.

The number of magnetic poles 22 need not be limited to 3 but can be a multiple of 3, and closed electric circuits 5, 6, 7 are connected to the coils provided on the respective poles. A force of rotation or straight force increased in corresponding relation with the multiple can then be exerted on the drive member 4.

The outer and inner magnetic members 2, 3 may be replaced by each other. The outer magnetic member 2 is then in the form of a cylinder having a yoke 2 only, and the inner mangetic member 3 is provided with iron cores, poles and coils. The drive member 4 in this case is rotatable or movable straight on the same principle as above.

Embodiments

FIGS. 5a and 5b show a specific embodiment having the basic structure 1 of FIG. 1b.

An outer magnetic member 2 is formed by providing inside a casing 1 a bundle of many pieces which are blanked out in the shape of the member 2 from a plate of iron-type magnetic material having small magnetic resistance, such as a carbon steel plate or silicon steel plate. The outer magnetic member 2 has a cylindrical yoke 21 extending along the inner surface of the casing 1 circumferentially thereof, first, second and third iron cores 231, 232, 233 projecting inward from the yoke 21 and arranged at a spacing of 120°, and circular-arc magnetic poles 22 formed at the inner ends of the respective cores. The first and second cores 231, 232 are provided respectively with a coil 51 for use in common for forward drive and reverse drive and a coil 61 for forward drive. The third core 233 has a coil 71 for reverse drive

An electric element 63 comprising a capacitor, resistor or the combination thereof is disposed in a suitable space in the casing 1, the terminals (not shown) of closed electric circuits 5, 6, 7 are arranged on a side face of the casing, and conductors 11 of an a.c. power source are connected to suitable terminals, whereby a drive member 4 is made rotatingly movable forward or reversely.

The drive member 4, which is a conductor, is made of a material having great magnetic resistance, i.e., a nonferrous nonmagnetic material such as aluminum, stainless steel, copper, brass or the like.

The drive member 4 is in the form of a cylinder having a uniform wall thickness and concentric with the arcs of the poles 22, and has opposite ends projecting out beyond opposite sides of the casing 1 and rotatably supported by bearings 12 provided on the sides of the casing 1.

An inner magnetic member 3 is made of the same magnetic material as the outer magnetic member 2, and is in the form of a short cylinder having the same width as the poles 22. The illustrated inner magnetic member 3 is opposed to the poles 22, attached to the drive member 4 inside thereof and rotatable with the member 4.

The inner magnetic member 3 may be separate from the drive member 4 and fixed to the casing 1 by suitable means. The drive member 4 only can then be rotated.

With the present embodiment, the direction of rotation of the drive member 4 can be changed merely by changing the connection of the conductors 11 to the terminals on the side face of the casing without necessitating change-over means for reversing the rotation of the drive shaft by a power transmission as in the case of conventional single-phase induction motors.

Further for use with a.c. power sources which are different in frequency or voltage, taps may be provided for specified numbers of turns of the coil. The force of rotation or torque of the drive member 4 can then be maintained at a constant value merely by connecting the conductor 11 to a suitable one of the taps. This eliminates the need for preparing many kinds of motors for use at different power source frequencies or voltages.

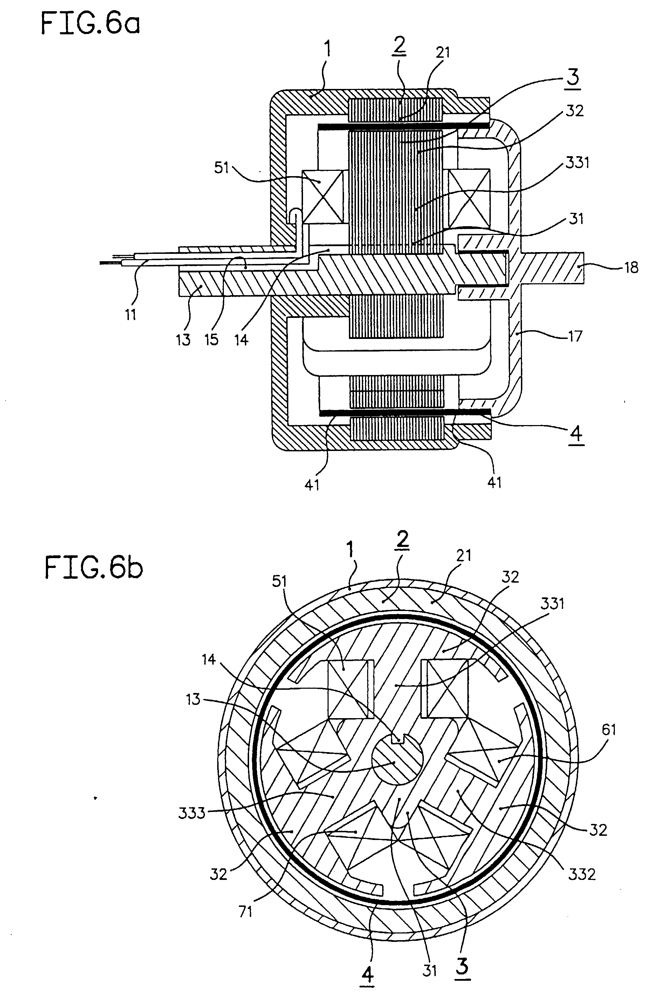

FIGS. 6a, 6b show a cylindrical yoke 21 attached to a casing 1 inside thereof to provide an outer magnetic member 2. An inner magnetic member 3 has a central yoke 31 fitted in a key groove 14 in a fixed shaft 13 disposed at the center of the casing 1, and is fixedly mounted on the shaft 13. Projecting from the yoke 31 are three iron cores 331, 332, 333 arranged at a spacing of 120° and provided with poles 32 and coils 51, 61, 71, respectively.

The inner surface of the yoke 21 of the outer magnetic member 2 and the outer faces of the poles 32 of the inner magnetic member 3 define a narrow cylindrical space, which has a cylindrical drive member 4 rotatably fitted therein. The right end of the drive member 4 is attached to the periphery of a disk 17 supported by the right end of the fixed shaft 13 to drive a drive shaft 18 projecting from the disk 17 centrally thereof.

The fixed shaft 13 has a bore 15 extending therethrough and holding the inside of the casing 1 in communication with the outside. Conductors 11 extend through the bore 15 into the casing 1 and are connected to terminals of the coils 51, 61, 71.

FIGS. 7a and 7b show an inner magnetic member 3 fixedly mounted on a fixed shaft 13 and having a yoke 31, iron cores 331, 332, 333, poles 32 and coils 51, 61, 71. An outer magnetic member 2 is integral with a casing 1 supported by the fixed shaft 13. A drive member 4, which is cylindrical, is attached to the outer magnetic member 2 inside thereof.

Conductors 11 extend into the casing via through the bores 15, 15 formed in the fixed shaft 13 at its opposite side portions and are connected to terminals of the coils 51, 61, 71. When a current is passed through the conductors 11, the casing 1, the outer magnetic member 2 and the drive member 4 rotate together.

For example, fan blades or like members, when attached to the outer periphery of the casing 1 or outer magnetic member 2, can be driven directly without the necessity of providing a transmission. This provides a compacted electric device which is operable with a reduced noise and diminished mechanical loss.

Another embodiment of different shape is shown in FIG. 14. With this device, an outer magnetic member 2 has a core 231 provided with a coil 51, and an inner magnetic member 3 has a core 333 provided with a coil 61. The inner magnetic member 3 has no yoke 31 but has the single core 333 only. The inner periphery of a drive member 4 is substantially covered with poles 321, 322, 323, one of which is disposed at one side of the core 333, the other two poles being arranged at the other side of the core. The outer magnetic member 2 has no yoke 21 but has one core 231 only. The outer periphery of the drive member 4 is substantially covered with poles 221, 222, 223, one of which is disposed at one end of the core 231, the other two poles being arranged at the other end of the core. The coil 51 is connected to an unillustrated a.c. power source to provide a closed electric circuit 5. The coil 61 is connected in series with an unillustrated electric element 63 to provide a closed electric circuit 6. When the conditions for the electric and magnetic circuits are so determined as to produce a phase difference of 120º by applying Kirchhoff's first and second laws to the relationship between the number of turns and equivalent resistance r2 of the coil 61 and the equivalent resistances $r3_1$, $r3_2$, $r3_3$ of the drive member 4, the equivalent magnetic resistance of the closed magnetic circuit, and the impedance of the electric element 63, the current I3 induced in the drive member 4 and magnetic flux $\Phi$ penetrating the member 4 produce an electromagnetic force F on the drive member 4 to rotatingly move the member 4.

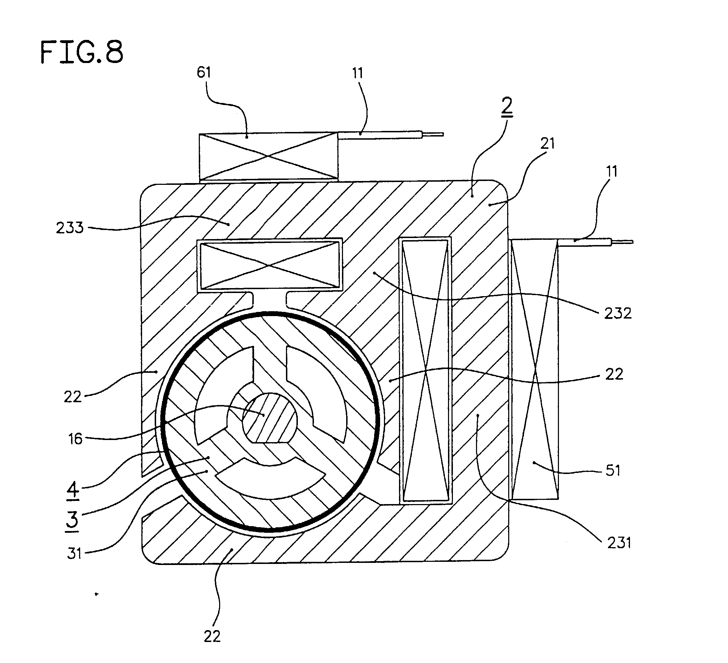

FIG. 8 shows an embodiment wherein the outer magnetic member 2 of the basic structure 1 shown in FIG. 1a has a rectangular outer peripheral contour. With this device, a yoke 21 of the outer magnetic member 2 has two cores 231, 232 projecting from one end thereof and a core 233 projecting from the other end thereof. The cores 231, 233 are provided with coils 51, 61, respectively. The coil 51 is connected to an a.c. power source 52 forming a portion of a closed electric circuit 5, while the coil 61 is connected in series with an electric element 63 comprising a capacitor, resistor or the combination thereof to provide a closed electric circuit 6. The cores 231, 232, 233 are provided with poles 22, the inner faces of which form a cylindrical shape in proximity to the outer periphery of a drive member 4. The drive member 4 is cylindrical, and an inner magnetic member 3 has a yoke 31 joined to the inner periphery of the drive member 4. The outer magnetic member 2 of the basic structure 1 has a modified shape for use in the present embodiment, and the inner magnetic member 3 and the drive member 4 in the form of an integral piece rotate on the same operating principle as already described. The contour of the outer magnetic member 2 can be modified as desired as in the case of the present embodiment.

Basic Structure 2

FIG. 9a shows the basic structure 2 of the present invention. For the ease of description, FIG. 9b shows the structure of FIG. 9a as cut along the line C-C in FIG. 9a and developed into an arrangement on a plane. In FIGS. 9a and 9b, like parts are designated by like reference numerals. The structure is modified into various embodiments as will be described later. An outer magnetic member 2 has three iron cores 231, 232, 233 projecting inward from a yoke 21, arranged at a spacing of 120º and each having an enlarged inner end to provide a magnetic pole 22 having a circular-arc inner face. The poles 22 of the outer magnetic member 2 are arranged close to one another and are so dimensioned as to substantially cover the length of a drive member 4. An inner magnetic member 3 comprises a yoke 31 in the form of a cylinder concentric with the inner face arcs of the poles 22 of the outer magnetic member 2. The drive member 4 to be described below is disposed between the inner magnetic member 3 and the poles 22.

As shown in FIG. 9b, each of the cores 231, 232, 233 of the outer magnetic member 2 has two independent upper and lower coils wound in the same direction. The finishing end of one of the coils on each core is connected to the starting end of one of the coils on another core adjacent thereto to provide first coils 51 which are connected to one another for all the cores 231, 232, 233. The other coils are similarly connected to one another to provide second coils 61.

The coils 51 are connected in series with an a.c. power source 52, for example, of 60 Hz to provide a closed electric circuit 5. The coils 61 are connected in series with an electric element 63 comprising a capacitor, resistor or the combination thereof to form a closed electric circuit 6. When the circuit 5 is energized by the power source 52 connected thereto, the coil 51 on each core produces magnetic flux thereon. Thus, fluxes $\Phi1$, $\Phi2$, $\Phi3$ penetrate the drive member 4 across respective gaps G1, G2, G3 defined by the yoke 31 and the cores 231, 232, 233. As to the relationship between the number of turns of the coils 61 and equivalent resistance r2 thereof, equivalent resistances $r3_1$, $r3_2$, $r3_3$ of the drive member 4, equivalent magnetic resistances of gaps G1, G2, G3 of the magnetic circuit and impedance of the electric element 63, the electric and magnetic circuit conditions are so determined as to displace the fluxes $\Phi 1$, $\Phi 2$, $\Phi 3$ by 120° in phase and give the same magnitude to the fluxes.

The drive member 4 has the same shape as in the basic structure 1, is rotatably disposed between the yoke 31 of the inner magnetic member 3 and the poles 22 of the outer magnetic member 2 and has edge portions 41, 41 at its opposite sides outside the regions where the poles 22 are opposed to the yoke 31.

Drive Principle

The drive member 4 operates on the following principle. The regions where the member 4 is positioned in the gaps G1, G2, G3 between the inner magnetic member 3 and the magnetic poles of the outer magnetic member 2 will be referred to by $A_1$, $A_2$, $A_3$, respectively.

When the closed electric circuit 5 is energized by the a.c. power source 52, each coil produces magnetic flux. Suppose the coils 51, 61 have equivalent resistances r1, r2, respectively.

When the circuit 5 is energized by the power source 52, a current I1 flows through the circuit so that the sum of electric power induced in the coil 51 by the flux $\Phi$ through the core and a voltage drop due to the equivalent resistance r1 will be in balance with the power source voltage at all times. A current I2 flows through the closed electric circuit 6 so that the sum of the equivalent resistance r2 and a voltage drop due to the impedance of the electric element 63 will be zero at all times.

The flux produced on the first coil 51 and second coil 61 on each of the cores 231, 232, 233 by the currents I1 and I2 forms a closed magnetic circuit originating from the core carrying the coils. For example, the flux produced by the coil 51 around the second core 232 extends from the pole 22 through the drive member 4 at the gap G2 and region $A_2$ to the yoke 31 of the inner magnetic member 3, passes through the yoke 31, separates into two portions, which then penetrate the drive member 4 at the regions $A_1$, $A_2$ in the gaps G1, G2 to reach poles 21 of the outer magnetic member 2, pass through the cores 231, 233 and join at the yoke 21 and return to the core 232, thus forming a closed magnetic circuit or reverse closed magnetic circuit. Similarly the coils 51, 61 on the cores 231, 232, 233 each form a closed magnetic circuit. The fluxes of the respective closed magnetic circuits are combined together. The fluxes extending from the poles 22 of the cores 231, 232, 233 to the yoke 31 through the gaps G1, G2, G3 and the regions $A_1$, $A_2$, $A_3$ will be indicated at $\Phi 1$, $\Phi 2$, $\Phi 3$, respectively. When the conditions for the electric and magnetic circuits are so determined as to produce a phase difference of 120° by applying Kirchhoff's first and second laws to the relationship between the numbers of turns and equivalent resistances r1, r2 of the coils 51, 61, the equivalent resistances $r3_1$, $r3_2$, $r3_3$ of the drive member 4, the equivalent magnetic resistances of the gaps G1, G2, G3 of the closed magnetic circuits and the impedance of the electric element 63, the fluxes $\Phi 1$, $\Phi 2$, $\Phi 3$ available are expressed by Eq. 3 and Eq. 4.

Assuming that the equivalent resistance of the drive member 4 around the regions $A_1$, $A_2$, $A_3$ is $r3_0$, the currents $I3_1$, $I3_2$, $I3_3$ induced by the fluxes $\Phi 1$, $\Phi 2$, $\Phi 3$ are expressed by Eq. 5.

Thus, as shown in FIGS. 3a to 3c relating to the basic structure 1, the induced current I3 has a waveform which is delayed by 90° in phase relative to the flux $\Phi$, and there is the relationship of $\Phi 1 + \Phi 2 + \Phi 3 = 0$ at optional time t0. As is the case with the basic structure 1, therefore, electromagnetic forces $F_1$, $F_2$, $F_3$ are produced respectively by the flux $\Phi 1$ penetrating the region $A_1$ of the drive member 4 and the induced currents $I3_2$, $I3_3$ across the region $A_1$, by the flux $\Phi 2$ penetrating the region $A_2$ and the induced currents $I3_1$, $I3_3$, across the region $A_2$, and by the flux $\Phi 3$ penetrating the region $A_3$ and the induced currents $I3_1$, $I3_2$ across the region $A_3$. As in the case of the basic structure 1, these forces act on the drive member 4.

The combined electromagnetic force F resulting from the superposition of the forces $F_1$, $F_2$, $F_3$ generated in the drive member 4 is expressed by Eq. 6. The force F is always definite in magnitude and direction independently of time t and is free of vibration. The force is a force of rotation acting on the drive member 4 circumferentially thereof or a straight force to translate the member 4 as will be described below, rotating the drive member 4 or moving the member 4 straight.

The outer magnetic member 2, inner magnetic member 3 and drive member 4 may be arranged as developed in parallel to a plane as shown in FIG. 9b. As shown in FIGS. 4b and 4c for the basic structure 1, a central drive portion 42 is separated from the edge portions 41, 41 at opposite sides, and each edge portion 41 is connected electrically at its opposite ends to an electric circuit 43. The drive portion 42 is slidable along the edge portions 41, 41 to move the member 4 straight.

The number of poles 22 need not be limited to 3 but can be a multiple of 3, and closed electric circuits 5, 6 are connected to the coils provided on the respective poles. A force of rotation or straight force increased in corresponding relation with the multiple can then be exerted on the drive member 4.

FIG. 10 shows iron cores 231, 232, 233 each provided with one coil 51, and the coils 51 are connected respectively to power sources 53, 54, 55 which are different from one another by 120° in phase, for example, to a three-phase power supply. The drive member 4 included in this arrangement can be rotated or moved straight similarly on the foregoing principle.

The structure of FIG. 9a is further developed into the structure of FIG. 11a, in which an inner magnetic member 3 also has three iron cores 331, 332, 333 projecting outward from a cylindrical yoke 31 and each having an enlarged end to provide a magnetic pole 32 having a circular-arc outer face. The poles 32 are arranged as opposed to the respective poles 22 of the outer magnetic member 2, and the opposed portions are made approximately the same in shape and area. The poles 22, 32 of the outer and inner magnetic members 2, 3 are closely positioned and are so dimensioned as to substantially cover the drive member 4 over the entire circumference. Each of the cores 331, 332, 333 of the inner member 3 also has two independent coils 51, 61. The first coils 51 are connected in such order that the finishing end of the coil 51 on one core 331 of the inner member 3 is connected to the starting end of the coil 51 on one core 231 of the outer member 2. The finishing end of this coil 51 is connected to the starting end of the coil 51 on the adjacent core 332 of the inner member 3 again. In this way, the coils 51 on the cores of the inner and outer members 3, 2 are alternately connected in series. Similarly the other coils 61 are also connected in series. In a closed electric circuit 5, the coils 51 are connected in series with an a.c. power source 52. In a closed electric circuit 6, the coils 61 are connected in series with an a.c. power source 62 by way of an electric element 63. As is the case with the structure of FIG. 9a, the equivalent resistance r2 and the impedance of the electric element 63 are so adjusted that the fluxes $\Phi1$, $\Phi2$, $\Phi3$ penetrating the regions $A_1$, $A_2$, $A_3$ are different by 120° in phase as expressed by Eq. 3 and Eq. 4 to produce induced currents $I3_1$, $I3_2$, $I3_3$ as expressed by Eq. 5, whereby electromagnetic forces $F_1$, $F_2$, $F_3$ are produced on the drive member 4 at the respective regions $A_1$, $A_2$, $A_3$. These forces are combined into an electromagnetic force F, by which the drive member 4 is rotated or moved straight.

Embodiments

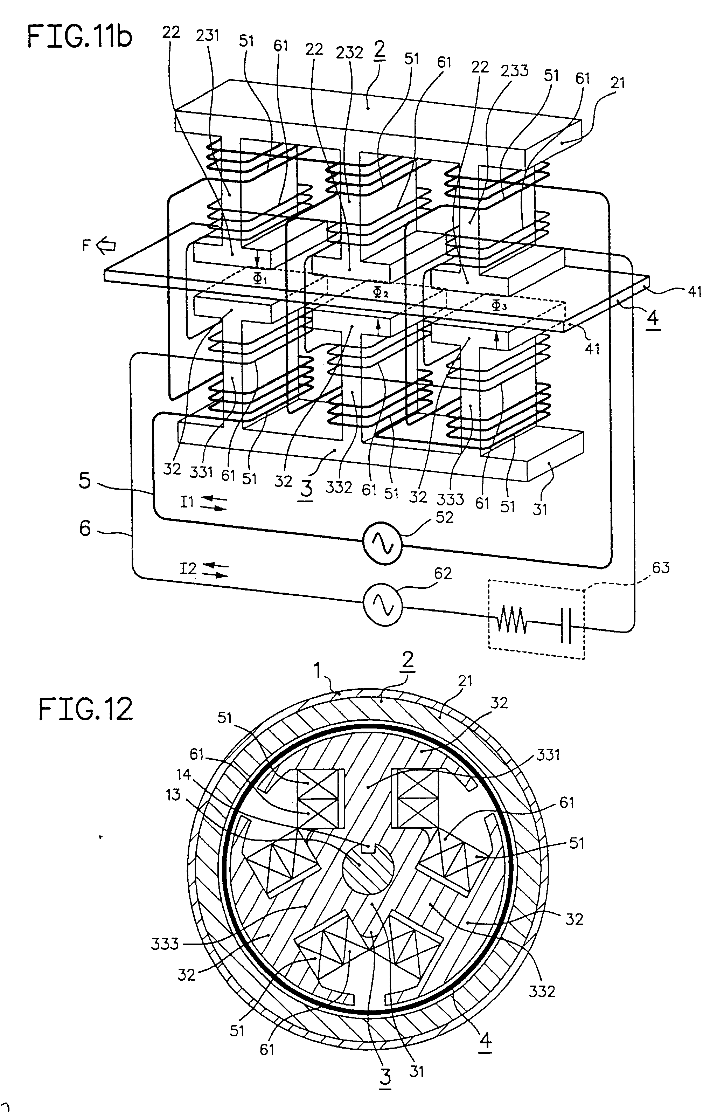

FIG. 12 shows an embodiment wherein an inner magnetic member 3 has a central yoke 31 fixedly fitted in a key groove 14 in a fixed shaft 13, and an outer magnetic member 2 comprises a cylindrical yoke 21 and is attached to a casing 1 inside thereof. A drive member 4 is freely rotatably disposed in a narrow cylindrical space defined by the yoke 21 of the outer member 2 and poles 32 of the inner member 3.

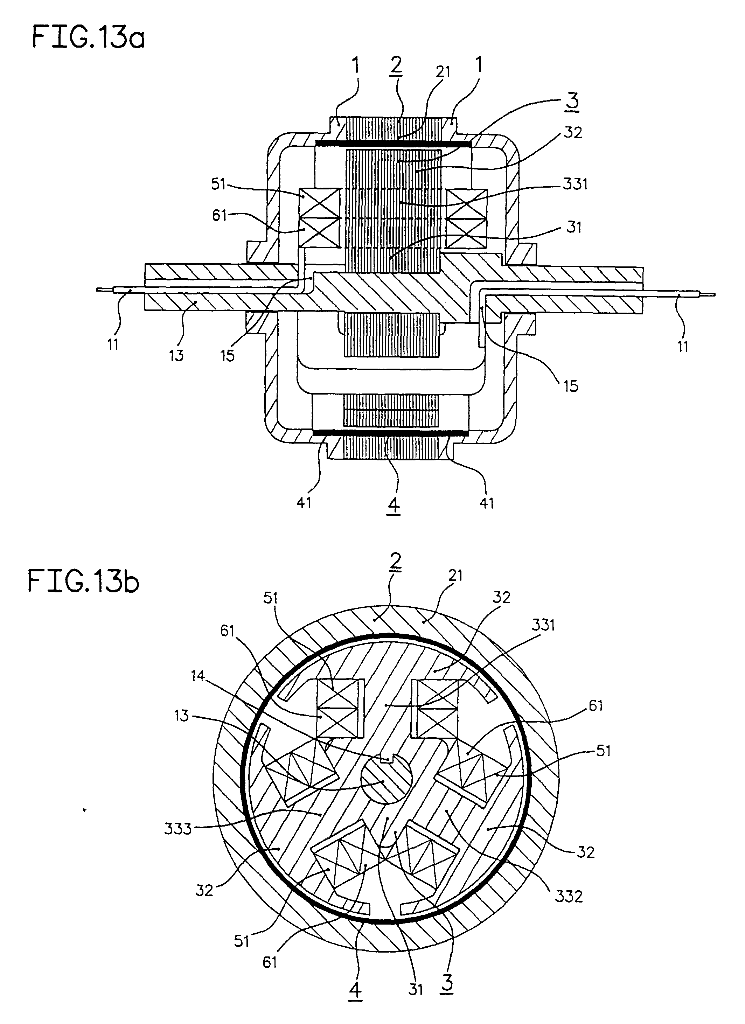

FIG. 13a shows an inner magnetic member 3 having first and second coils 51, 61 on each core thereof, an outer magnetic member 2 comprising a yoke 21, and a drive member 4 joined to the yoke 21. FIG. 13b is a sectional view of the device of FIG. 13a as cut along a plane orthogonal to its rotary shaft. The construction of the device will be described specifically below.

A bundle of many cylindrical plate pieces blanked out from a plate of ferrous magnetic material having small magnetic resistance, such as a carbon steel plate or silicon steel plate, is disposed between casings 1, 1 to provide the outer magnetic member 2.

The drive member 4 is a cylinder having a greater length than the outer magnetic member 2, and has a central portion held in intimate contact with the inner surface of the outer member 2 and opposite edge portions 41, 41 attached to the inner surface of the casings 1.

The inner magnetic member 3 is made of the same magnetic material as the outer magnetic member 2, and has a cylindrical yoke 31, iron cores 331, 332, 333 projecting outward from the yoke 31 and arranged at a spacing of 120°, and a circular-arc pole 32 formed at the outer end of each core. The first coil 51 and the second coil 61 are wound in the same direction on each core and are independent of each other. The inner magnetic member 2 is fixed to a fixed shaft 13. The drive member 4 is attached to the inner surface of the outer magnetic member 2. The assembly of the casings 1, 1, outer member 2 and drive member 4 is rotatably provided on the fixed shaft 13.

An electric element 63 comprising a capacitor, resistaor or the combination thereof is disposed in a suitable space inside the casings 1, 1, and terminals (not shown) of closed electric circuits 5, 6 are arranged on the side face of the casing 1. Conductors 11 of a.c. power sources are connected to suitable terminals to rotate the outer magnetic member 2 with the drive member 4.

The material and shape of the drive member 4 are the same as in the basic structure 1.

The fixed shaft 13 has through the bores 15 holding the inside of the casings 1 in communication with the outside. The conductors 11 extend through the bores 15 inside the casings 1 and connected to the terminals of the coils 51, 61.

When the closed electric circuits 5, 6 of the foregoing two embodiments are energized by the a.c. power sources 52, 62, closed magnetic circuits including the respective poles 32 are formed based on the foregoing principle, whereby the drive member 4 or the outer magnetic member 2 joined to the member 4 is rotated. When taps are provided for speicified numbers of turns of the coils, the force of rotation of the drive member 4 can be maintained at a constant value merely by connecting the conductor 11 to a suitable one of the taps. This eliminates the need for preparing many kinds of motors for use at different power source frequencies or voltages as is the case with the basic structure 1.

In the case where the casing 1 and the outer magnetic member 2 are made rotatable together, fan blades or the like, if attached to the outer periphery of these components , can be directly driven as in the case of the basic structure 1.

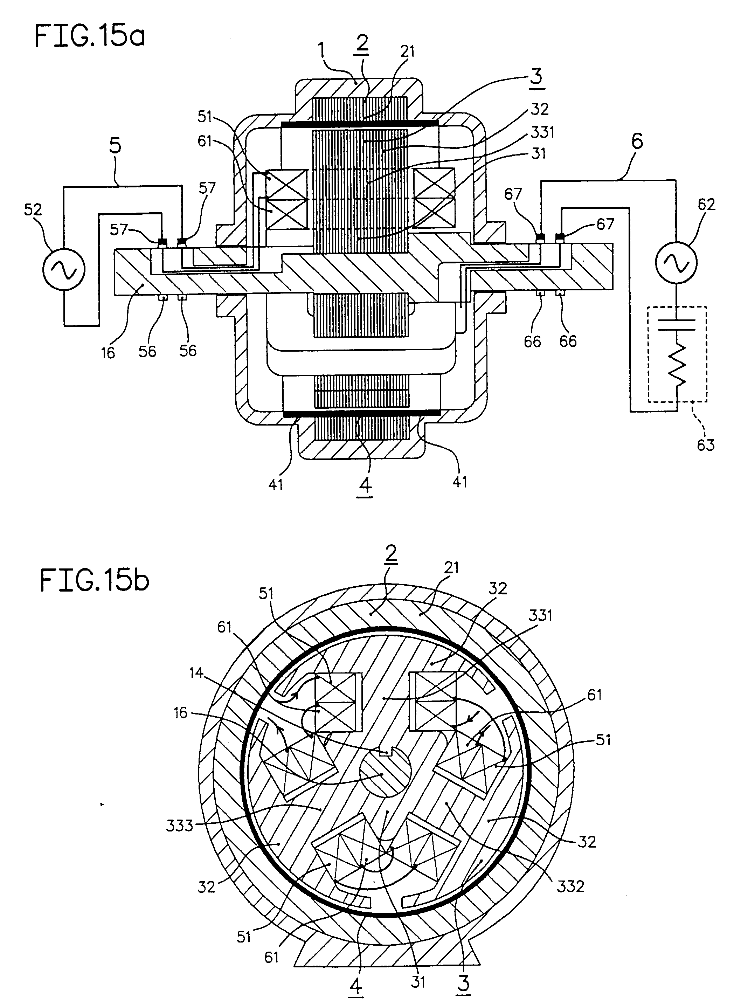

FIGS. 15a, 15b show an outer magnetic member 2 and a drive member 4 which are joined together and fixed to a casing 1. An inner magnetic member 3 has a cylindrical yoke 31 fixed to a rotary shaft 16 rotatably supported by the casing 1, three iron cores 331, 332, 333 projecting outward from the yoke 31, and poles 32 having their outer faces positioned close to the inner periphery of the drive member 4. Coils 51 provided on the inner member 3 are connected to an a.c. power source 52 via slip rings 56 and brushes 57 to constitute a closed electric circuit 5. Coils 61 are connected to an a.c. power source 62 via slip rings 66 and brushes 67 and by way of an electric element 63 to constitute a closed electric circuit 6. Since the outer magnetic member 2 is fixed to the drive member 4, energization of the coils 51, 61 by the power sources 52, 62 causes the inner magnetic member 3 to rotate with the rotary shaft 16, from which the torque is available. The construction described is similarly applicable also the basic structure 1. Alternatively, the coils 51, 61 may be provided on the outer magnetic member 2 which is made freely rotatable, with the inner magnetic member 3 held stationary.

FIGS. 16a to 16f show embodiments of the invention having the basic structure 1 or 2 for various uses. These devices can be driven based on the principle of either the basic structure 1 or basic structure 2.

FIG. 16a shows a device of the invention serving as the drive source for a belt conveyor. The device comprises an outer magnetic member 2 provided with coils (not shown), an inner magnetic member 3 comprising a cylindrical yoke 31 which is rotatably supported, and a drive member 4 in an endless form and made of a conductive nonmagnetic material having high elasticity. The surfaces of the drive member 4 and the inner magnetic member 3 are given increased friction resistance to eliminate slippage. The outer magnetic member 2 is semicircular and partly left open to permit the drive member 4 to move into and out of the member 2, whereas closed magnetic circuits are formed between the outer and inner magnetic members 2, 3, whereby the basic structure 1 or 2 is realized. When the device is energized by a.c. power source, the inner member 3 and the drive member 4 rotate or revolve for the drive member 4 to serve directly as the belt of a belt conveyor.

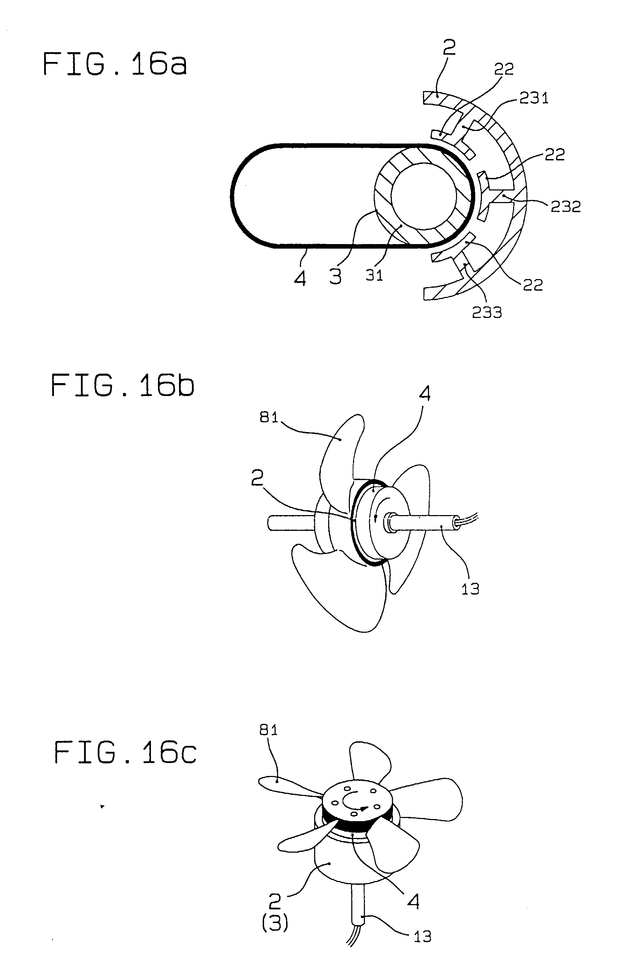

FIG. 16b shows an embodiment wherein an outer magnetic member 2 and a drive member 4 are joined together and freely rotatably supported, and fan blades 81 are attached to the outer periphery of the outer member 2. FIG. 16c shows an embodiment comprising an inner magnetic member 3 and a drive member 4 which are joined together and supported rotatably, and fan blades 81 mounted on one end of the drive member 4. When these devices are energized by an a.c. power source, the fan blades 81 are driven.

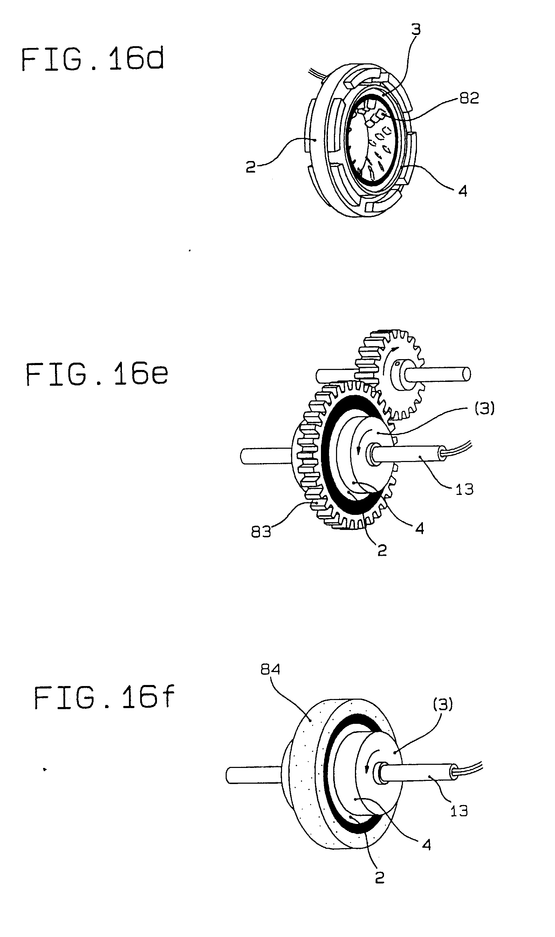

FIG. 16d shows a crusher comprising a fixed outer magnetic member 2, an inner magnetic member 3 and a drive member 4 which are joined together and freely rotatably supported, and cutting blades 82 provided on the inner periphery of the inner member 3. When the device is energized by an a.c. power source, the inner member 3 rotates with the drive member 4 to drivingly revolve the cutting blades 82, whereby materials are crushed with the blades 82.

FIGS. 16e and 16f show devices which comprise an outer magnetic member 2 and a drive member 4 which are joined together and freely rotatably supported, a fixed inner magnetic member 3, and a gear 83 or abrasive wheel 84 provided on the outer periphery of the outer member 2. When the device is energized by an a.c. power source, the gear 83 or abrasive wheel 84 is driven for rotation.

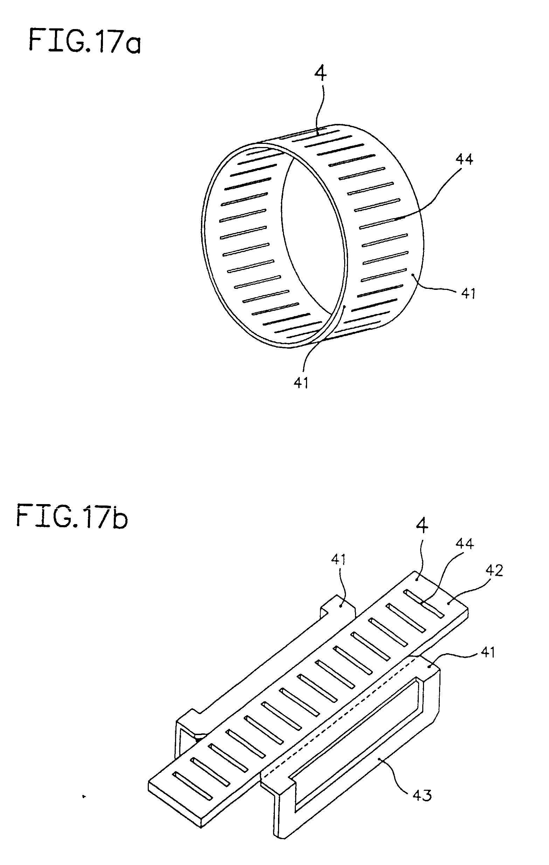

FIGS. 17a and 17b show other embodiments of drive member 4. In FIG. 17a, the drive member 4 is a cylinder having a uniform wall thickness, and has in a direction orthogonal to the direction of rotation a length greater than the width of poles 22. The member 4 has slits 44 extending widthwise thereof and having a length approximately equal to or larger than the width of poles 22 or 32. The drive member 4 of FIG. 17b is a plate having a uniform thickness and, in a direction orthogonal to the direction of straight movement, a length greater than the width of poles 22. A drive portion 42 has a width equal to or smaller than the width of poles 22 or 32, and is formed with slits 44 extending widthwise and smaller than the width. With these embodiments, induced currents flowing in the drive member 4 flow along the slits 44, so that the electromagnetic forces exerted by fluxes have a definite direction, so that these forces can be converted to a torque efficiently. The drive member 4 is useful insofar as the portion thereof to be opposed to the poles 22, 32 is at least made of a nonmagnetic conductive material. For example, the widthwise opposite edge portions 41, 41 can be made of a conductive material such as iron.

## Claims

1. An electromagnetic induction driving method comprising the steps of:

disposing an outer magnetic member (2) and an inner magnetic member (3) opposingly adjacent one another, at least one of the outer magnetic member and the inner magnetic member forming at least three magnetic poles opposing the other magnetic members, thereby forming at least a closed magnetic circuit having at least three gaps defined by the outer magnetic member and the inner magnetic member opposed thereto;
disposing in each of the gaps a single drive member (4) made of an electrically conductive material, which is wider than the width of each of magnetic poles, said single drive member being provided at each of its opposite sides with edge portions (41) not opposing the gaps;
producing in each of said gaps a magnetic flux, the phases of each of the magnetic fluxes being different from one another, and the intensity of each of the magnetic fluxes varying with time;
generating induced currents in the drive member by penetrating magnetic fluxes at each position opposing the gaps, and inducing currents circulating around said positions by way of both edge portions;
producing electromagnetic force on the drive member by the magnetic fluxes penetrating the drive member and the circulating induced currents at the gaps on the path of circulation; and
rotating or moving straight the drive member in one direction.

2. An electromagnetic induction driving method as defined in claim 1 wherein the inner magnetic member (3) and the drive member (4) are each in the form of a cylinder and joined together, and magnetic poles (22) are formed on the outer magnetic member (2) to rotate the inner magnetic member and the drive member.

3. An electromagnetic induction driving method as defined in claim 1 wherein the outer magnetic member (2) and the drive member (4) are each in the form of a cylinder and joined together, and magnetic poles (32) are formed on the inner magnetic member (3) to rotate the outer magnetic member and the drive member.

4. An electromagnetic induction driving method as defined in claim 1 wherein the drive member (4) is in the form of a cylinder, and magnetic poles (22,32) are formed on the outer and inner magnetic members (2,3) and opposed respectively to the outer side and the inner side of the drive member to rotate the drive member.

5. An electromagnetic induction driving method as defined in claim 1 wherein at least one of the outer and inner magnetic members (2,3) is provided with at least three magnetic poles, at least one of the poles being provided with a coil (51) for use in common for forward and reverse driving, the other poles being provided with a forward driving coil (61) and a reverse driving coil (71) respectively, the forward and reverse driving coil being electrically connected in series with an a.c. power source (52) to constitute a first closed electric circuit (5), the forward driving coil and the reverse driving coil being alternatively connectable electrically in series with an electric element (63) comprising a capacitor, resistor or the combination thereof to constitute second and third closed electric circuits (6,7), whereby at least three forward or reverse phase differences are produced between magnetic fluxes penetrating the drive member (4).

6. An electromagnetic induction driving method as defined in claim 1 wherein at least one of the outer and inner magnetic members (2,3) is provided with at least three magnetic poles, at least one of the poles being provided with a coil (51) electrically connected in series with an a.c. power source (52) to constitute a first closed electric circuit (5), at least one of the poles being provided with a coil (61) electrically connected in series with an electric element (63) comprising a capacitor, resistor or the combination thereof to constitute a second closed electric circuit (6), whereby at least three phase differences are produced between magnetic fluxes penetrating the drive member(4).

7. An electromagnetic induction driving method as defined in claim 1 wherein at least one of the outer and inner magnetic members (2,3) has three magnetic poles each provided with a coil (51), the coils being connected to three-phase a.c. power sources (53,54,55) to produce three phase differences between magnetic fluxes penetrating the drive member (4).

8. An electromagnetic induction driving device comprising:

an outer magnetic member (2);
an inner magnetic member (3) disposed opposingly adjacent to said outer magnetic member;
at least three magnetic poles provided at least on one of the outer and inner magnetic members and opposing the other magnetic member, thereby forming at least one closed magnetic circuit having at least three gaps defined by said inner magnetic member and said outer magnetic member;
a first coil (51) connected with an a.c. power source (52) provided at least at one magnetic pole the first coil producing said closed magnetic circuits passing around the magnetic pole, one of said gaps associated with said magnetic pole, the other magnetic member, the other said gaps and the other magnetic poles;
a second coil (61) and a third coil (71) provided on the other magnetic poles, respectively, said second and third coils connected with or without an a.c. power source, said coils being connectable by a switch (64) with a capacitor or a resistor or an electrical element (63) comprising a capacitor and resistor, said coils being electrically connectable by the switch; and
a single drive member made of an electrically conductive material, disposed in each of the gaps between the magnetic poles and the other magnetic member, the drive member being wider than each of the poles and provided at each of its opposite sides with edge portions (41) not opposed to the gaps.

9. An electromagnetic induction driving device as defined in claim 8 wherein the inner magnetic member (3) and the drive member (4) are each in the form of a cylinder and joined together, and the magnetic poles (22) are formed on the outer magnetic member (2) to rotate the inner magnetic member and the drive member.

10. An electromagnetic induction driving device as defined in claim 8 wherein the outer magnetic member (2) and the drive member (4) are each in the form of a cylinder and joined together, and the magnetic poles (32) are formed on the inner magnetic member (3) to rotate the outer magnetic member and the drive member.

11. An electromagnetic induction driving device as defined in claim 8 wherein the edge portions (41,41) at the opposite sides of the drive member (4) are separated therefrom and are each electrically connected at opposite ends thereof to an electric circuit (43), a central drive portion (42) of the member (4) being slidable relative to the edge portions (41,41), whereby the drive member is rotated or moved straight.

12. An electromagnetic induction driving device as defined in claim 8 wherein the drive member (4) is formed with slits (44) in a direction orthogonal to the direction of movement thereof.

13. An electromagnetic induction driving device as defined in claim 8 wherein the poles (22) are smaller than the drive member (4) in width and are arranged centrally of the drive member, and the drive member (4) is supported rotatably or movably straight and is uniform in wall thickness and width.

14. An electromagnetic induction driving device comprising;

an outer magnetic member (2);
an inner magnetic member (3) disposed opposingly adjacent to said outer magnetic member;
at least three magnetic poles provided at least on one of the outer and inner magnetic members and opposing the other magnetic member, thereby forming at least one closed magnetic circuit having at least three gaps defined by said inner magnetic member and said outer magnetic member;
a first coil (51) connected with an a.c. power source (52) provided at least at one magnetic pole, the first coil producing said closed magnetic circuits passing around the magnetic pole, one of said gaps associated with said magnetic pole, the other magnetic member, the other said gaps and the other magnetic poles;
a second coil (61) connected with a capacitor or a resistor or an electrical element (63) comprising a capacitor and resistor provided on another magnetic pole; and
a single drive member (4) constructed of an electrically conductive material, disposed in each of the gaps between the magnetic poles and the other magnetic member, the drive member being wider than each of the poles and provided at each of its opposite sides with edge portions (41) not opposed to the gaps.

15. An electromagnetic induction driving device as defined in claim 14 wherein the poles (22) are smaller than the drive member (4) in width and are arranged centrally of the drive member, and the drive member (4) is supported rotatably or movably straight and is uniform in wall thickness and width.

16. An electromagnetic induction driving device as defined in claim 14 wherein the inner magnetic member (3) and the drive member (4) are each in the form of a cylinder and joined together, and the magnetic poles (22) are formed on the outer magnetic member (2) to rotate the inner magnetic member and the drive member.

17. An electromagnetic induction driving device as defined in claim 14 wherein the outer magnetic member (2) and the drive member (4) are each in the form of a cylinder and joined together, and the magnetic poles (32) are formed on the inner magnetic member (3) to rotate the outer magnetic member and the drive member.

18. An electromagnetic induction driving device as defined in claim 14 wherein the edge portions (41,41) at the opposite sides of the drive member (4) are separated therefrom and are each electrically connected at opposite ends thereof to an electric circuit (43), a central drive portion (42) of the member (4) being slidable relative to the edge portions (41,41), whereby the drive member is rotated or moved straight.

19. An electromagnetic induction driving device as defined in claim 14 wherein the drive member (4) is formed with slits (44) in a direction orthogonal to the direction of movement thereof.

**Patentansprüche**

1. Antriebsverfahren mittels elektromagnetischer Induktion mit folgenden Schritten:

   - Anordnen eines äußeren Magnetteils (2) und eines inneren Magnetteils (3), so daß sie einander benachbart gegenüberliegen, wenigstens eines der äußeren und inneren Magnetteile bildet zumindest drei Magnetpole, die dem anderen Magnetteilen gegenüberliegen, wodurch zumindest ein geschlossener Magnetkreis mit zumindest drei Spalten gebildet wird, die durch das äußere Magnetteil und das dazu gegenüberliegende innere Magnetteil festgelegt werden;
   - Anordnen eines einzelnen Antriebsgliedes (4) aus elektrisch leitendem Material in jedem der Spalte, das breiter als die Breite jedes Magnetpols ist, das einzelne Antriebsglied ist aufjeder seiner gegenüberliegenden Seiten mit Kantenabschnitten (41) versehen, die den Spalten nicht gegenüberliegen;
   - Erzeugen eines magnetischen Flusses in jedem der Spalte, die Phasen der einzelnen magnetischen Flüsse sind verschieden voneinander und die Intensität von jedem der Magnetflüsse ändert sich mit der Zeit;
   - Erzeugen induzierter Ströme in dem Antriebsglied durch durchdringende magnetische Flüsse in jeder Position gegenüber den Spalten und Induzieren von Strömen, die durch die beiden Kantenabschnitte um die Positionen herum zirkulieren;
   - Erzeugen einer elektromagnetischen Kraft an dem Antriebsglied durch die magnetischen Flüsse, die das Antriebsglied durchdringen, und die zirkulierenden, induzierten Ströme in den Spalten auf dem Zirkulationspfad: und
   - Rotierenlassen oder gerade Bewegen des Antriebsglieds in einer Richtung.

2. Verfahren nach Anspruch 1, wobei das innere Magnetteil (3) und das Antriebsglied (4) jeweils Zylinderform aufweisen und miteinander verbunden sind, und Magnetpole (22) an dem äußeren Magnetteil (2) ausgebildet sind, um das innere Magnetteil und das Antriebsglied rotieren zu lassen.

3. Verfahren nach Anspruch 1, wobei das äußere Magnetteil (2) und das Antriebsglied (4) Zylinderform aufweisen und miteinander verbunden sind, und Magnetpole (32) an dem inneren Magnetteil (3) aufgebildet sind, um das äußere Magnetteil und das Antriebsteil rotieren zu lassen.

4. Verfahren nach Anspruch 1, wobei daß das Antriebsglied (4) zylindrisch ist, und Magnetpole (22, 32) an den äußeren und inneren Magnetteilen (2, 3) ausgebildet sind und der Außenseite bzw. der Innenseite des Antriebsglieds gegenüber zu liegen, um das Antriebsglied rotieren zu lassen.

5. Verfahren nach Anspruch 1, wobei wenigstens eines der äußeren und inneren Magnetteile (2, 3) mit wenigstens drei Magnetpolen versehen ist, wenigstens einer der Pole mit einer Wicklung zur gemeinsamen Benutzung für Vorwärts- und Rückwärtsantrieb versehen ist, die anderen Pole mit einer Vorwärtsantriebswicklung (61) bzw. einer Rückwärtsantriebswicklung (71) versehen sind, die Vorwärts- und Rückwärtsantriebswicklungen mit einer elektrischen Wechselstromquelle (52) in Reihe geschaltet sind, um einen ersten geschlossenen elektrischen Kreis (5) zu bilden, die Vorwärtsantriebsspule und die Rückwärtsantriebsspule alternativ in Reihe mit einem elektrischen Element (63) verbindbar sind, das einen Kondensator, Widerstand oder eine Kombination davon umfaßt, um zweite und dritte geschlossene elektrische Kreise (6, 7) zu bilden, wodurch wenigstens drei Vorwärts- oder Rückwärtsphasendifferenzen zwischen das Antriebsglied (4) durchdringenden magnetischen Flüssen erzeugt werden.

6. Verfahren nach Anspruch 1, wobei wenigstens eines der äußeren und inneren Magnetteile (2, 3) mit wenigstens drei magnetischen Polen versehen ist, wenigstens einer der Pole mit einer Wicklung (51) versehen ist, die in Reihe mit einer Wechselstromquelle (52) geschaltet ist, um einen ersten geschlossenen elektrischen Kreis (5) zu bilden, zumindest einer der Pole mit einer Wicklung (61) versehen ist, die in Reihe mit einem elektrischen Element (63) geschaltet ist, das einen Kondensator, einen Widerstand oder eine Kombination davon aufweist, um einen zweiten geschlossenen elektrischen Kreis (6) zu bilden, wodurch zumindest drei Phasendifferenzen zwischen das Antriebsglied durchdringenden magnetischen Flüssen erzeugt werden.

7. Verfahren nach Anspruch 1, wobei zumindest eines der äußeren und inneren Magnetteile (2, 3) drei Magnetpole aufweist, von denen jeder mit einer Wicklung (51) versehen ist, die Wicklungen mit einer Drei-Phasenwechselstromquelle (53, 54, 55) verbunden sind, um drei Phasendifferenzen zwischen das Antriebsglied (4) durchdringenden magnetischen Flüssen zu erzeugen.

8. Antriebsvorrichtung mit elektromagnetischer Induktion, mit

- einem äußeren Magnetteil (2);
- einem inneren Magnetteil (3), das dem äußeren Magnetteil benachbart gegenüberliegenden angeordnet ist;
- zumindest drei Magnetpolen, die zumindest an einem der äußeren und inneren Magnetteile vorgesehen sind und dem anderen Magnetteil gegenüberliegen, wodurch zumindest ein geschlossener Magnetkreis mit zumindest drei durch das innere Magnetteil und das äußere Magnetteil definierten Spalten gebildet ist;
- einer ersten, mit einer Wechselstromquelle (52) verbundenen Wicklung (51), die zumindest an einem Magnetpol vorgesehen ist, die erste Wicklung erzeugt die geschlossenen Magnetkreise, die durch den Magnetpol, einen der Spalte, der dem Magnetpol zugeordnet ist, das andere Magnetteil, die anderen der Spalte und die anderen Magnetpole geht;
- einer zweiten Wicklung (61) und einer dritten Wicklung (71), die jeweils auf den anderen Magnetpolen vorgesehen sind, die zweiten und dritten Wicklungen sind mit einer Wechselstromquelle verbunden oder nicht, die Wicklungen sind durch einen Schalter (64) mit einem Kondensator oder einem Widerstand oder einem elektrischen Element (63), das einen Kondensator und einen Widerstand enthält, verbindbar, die Wicklungen sind elektrisch verbindbar durch den Schalter; und
- einem einzelnen Antriebsglied aus elektrisch leitendem Material, das in jedem der Spalte zwischen den Magnetpolen und dem anderen magnetischen Teil angeordnet ist, das Antriebsteil ist breiter als jeder der Pole und an seinen gegenüberliegenden Seiten mit Kantenabschnitten (41) versehen, die den Spalten nicht gegenüberliegen.

9. Anspruchsvorrichtung nach Anspruch 8, wobei das innere Magnetteil (3) und das Antriebsteil (4) zylindrisch und miteinander verbunden sind, und die Magnetpole (22) am äußeren Magnetteil (2) ausgebildet sind, um das innere Magnetteil und das Antriebsglied rotieren zu lassen.

10. Antriebsvorrichtung nach Anspruch 8, wobei das äußere Magnetteil (2) und das Antriebsteil (4) zylindrisch und miteinander verbunden sind, und die Magnetpole (32) an dem innere Magnetteil (3) ausgebildet sind, um das äußere Magnetteil und das Antriebsteil rotieren zu lassen.

11. Antriebsvorrichtung nach Anspruch 8, wobei die Kantenabschnitte (41, 41) auf den gegenüberliegenden Seiten des Antriebsgliedes (4) davon getrennt sind und jedes elektrisch mit entgegengesetzten Enden davon mit einem elektrischen Kreis (43) elektrisch verbunden sind, ein zentraler Antriebsabschnitt (42) des Gliedes (4) relativ zu den Kantenabschnitten (41, 41) gleitfähig ist, wodurch das Antriebsglied gedreht oder gerade bewegt wird.

12. Antriebsvorrichtung nach Anspruch 8, wobei das Antriebsglied (4) mit Schlitzen (44) senkrecht zu seiner Bewegungsrichtung ausgebildet ist.

13. Antriebsvorrichtung nach Anspruch 8, wobei die Pole (22) in der Breite kleiner als das Antriebsglied (4) sind und mittig zum Antriebsglied angeordnet sind, und das Antriebsglied (4) drehbar oder geradlinig bewegbar gelagert ist und eine einheitliche Wanddicke und Breite aufweist.

14. Antriebsvorrichtung mit elektromagnetischer Induktion, mit

- einem äußeren Magnetteil (2);
- einem inneren Magnetteil (3), das dem äußeren Magnetteil benachbart gegenüberliegenden angeordnet ist;
- zumindest drei Magnetpolen, die zumindest an einem des äußeren und inneren Magnetteils vorgesehen sind und dem anderen Magnetteil gegenüberliegen, wodurch zumindest ein geschlossener Magnetkreis mit zumindest drei durch das innere Magnetteil und das äußere Magnetteil definierten Spalten gebildet ist;
- einer ersten, mit einer Wechselstromquelle (52) verbundenen Wicklung (51), die zumindest an einem Magnetpol vorgesehen ist, die erste Wicklung erzeugt die geschlossenen Magnetkreise, die durch den Magnetpol, einen der Spalte, der dem Magnetpol zugeordnet ist, das andere Magnetteil, die anderen der Spalte und die anderen Magnetpole geht;
- einer zweiten Wicklung (61), die mit einem Kondensator oder Widerstand oder einem elektrischen Element (63) mit einem Kondensator und einem Widerstand verbunden ist, die an einem anderen Magnetpol vorgesehen ist, und
- einem einzelnen Antriebsglied aus elektrisch leitendem Material, das in jedem der Spalte zwischen den Magnetpolen und dem anderen magnetischen Teil angeordnet ist, das Antriebsteil ist breiter als jeder der Pole und an seinen gegenüberliegenden Seiten mit Kantenabschnitten (41) versehen, die den Spalten nicht gegenüberliegen.

**15.** Antriebsvorrichtung nach Anspruch 14, wobei die Pole (22) in der Breite kleiner als das Antriebsglied (4) sind und mittig zum Antriebsglied angeordnet sind, und das Antriebsglied (4) drehbar oder geradlinig bewegbar gelagert ist und eine einheitliche Wanddicke und Breite aufweist.

**16.** Anspruchsvorrichtung nach Anspruch 14, wobei das innere Magnetteil (3) und das Antriebsteil (4) zylindrisch und miteinander verbunden sind, und die Magnetpole (22) am äußeren Magnetteil (2) ausgebildet sind, um das innere Magnetteil und das Antriebsglied rotieren zu lassen.

**17.** Antriebsvorrichtung nach Anspruch 8, wobei das äußere Magnetteil (2) und das Antriebsteil (4) zylindrisch und miteinander verbunden sind, und die Magnetpole (32) an dem innere Magnetteil (3) ausgebildet sind, um das äußere Magnetteil und das Antriebsteil rotieren zu lassen.

**18.** Antriebsvorrichtung nach Anspruch 8, wobei die Kantenabschnitte (41, 41) auf den gegenüberliegenden Seiten des Antriebsgliedes (4) davon getrennt sind und jedes elektrisch mit entgegengesetzten Enden davon mit einem elektrischen Kreis (43) elektrisch verbunden sind, ein zentraler Antriebsabschnitt (42) des Gliedes (4) relativ zu den Kantenabschnitten (41, 41) gleitfähig ist, wodurch das Antriebsglied gedreht oder gerade bewegt wird.

**19.** Antriebsvorrichtung nach Anspruch 8, wobei das Antriebsglied (4) mit Schlitzen (44) senkrecht zu seiner Bewegungsrichtung ausgebildet ist.

**Revendications**

**1.** Procédé de propulsion par induction électromagnétique comprenant les étapes consistant à:

- disposer un élément magnétique externe (2) et un élément magnétique interne (3) contigus et opposés l'un à l'autre, au moins un de l'élément magnétique externe et de l'élément magnétique interne formant au moins trois pôles magnétiques opposés aux autres éléments magnétiques, formant, de ce fait, au moins un circuit magnétique fermé comportant au moins trois espaces définis par l'élément magnétique externe et par l'élément magnétique interne opposé à celui-ci ;
- disposer, dans chacun des espaces, un élément d'entraînement unique (4) constitué d'un matériau électriquement conducteur, qui est plus large que la largeur de chacun des pôles magnétiques, ledit élément d'entraînement unique étant pourvu, à chacun de ses côtés opposés, de parties de bord (41) qui ne sont pas opposées aux espaces;
- produire, dans chacun desdits espaces, un flux magnétique, les phases de chacun des flux magnétiques étant différentes les unes des autres et l'intensité de chacun des flux magnétiques variant dans le temps;
- générer des courants induits dans l'élément d'entraînement en faisant pénétrer des flux magnétiques à chacune des positions opposées aux espaces et induire des courants circulant autour desdites positions au moyen des deux parties de bord;
- produire une force électromagnétique sur l'élément d'entraînement par les flux magnétiques pénétrant dans l'élément d'entraînement et les courants induits circulant aux espaces sur le trajet de circulation; et mettre en rotation ou déplacer en ligne droite l'élément d'entraînement dans une direction.

**2.** Procédé de propulsion par induction électromagnétique selon la revendication 1, dans lequel l'élément magnétique interne (3) et l'élément d'entraînement (4) sont chacun sous la forme d'un cylindre et joints l'un à l'autre, et des pôles magnétiques (22) sont formés sur l'élément magnétique externe (2) afin de mettre en rotation l'élément magnétique interne et l'élément d'entraînement.

**3.** Procédé de propulsion par induction électromagnétique selon la revendication 1, dans lesquel l'élément magnétique externe (2) et l'élément d'entraînement (4) sont chacun sous la forme d'un cylindre et joints l'un à l'autre, et des pôles magnétiques (32) sont formés sur l'élément magnétique interne (3) afin de mettre en rotation l'élément magnétique externe et l'élément d'entraînement.

**4.** Procédé de propulsion par induction électromagnétique selon la revendication 1 dans lequel l'élément d'entraînement (4) est sous la forme d'un cylindre et des pôles magnétiques (22, 32) sont formés sur les éléments magnétiques externe et interne (2,3) et opposés, respectivement, au côté externe et au côté interne de l'élément d'entraînement pour mettre en rotation l'élément d'entraînement.

5. Procédé de propulsion par induction électromagnétique selon la revendication 1, dans lequel au moins un des éléments magnétiques externe et interne (2, 3) est pourvu d'au moins trois pôles magnétiques, au moins un des pôles étant pourvu d'une bobine (51) destinée à être utilisée en commun pour la propulsion en avant et en arrière, les autres pôles étant pourvus, respectivement, d'une bobine de propulsion en avant (61) et d'une bobine de propulsion en arrière (71), les bobines de propulsion en avant et en arrière étant connectées électriquement en série à une source d'alimentation alternative (52) pour constituer un premier circuit électrique fermé (5), la bobine de propulsion en avant et la bobine de propulsion en arrière étant, alternativement, susceptibles d'être connectées électriquement en série à un élément électrique (63) comprenant un condensateur, une résistance ou la combinaison de ceux-ci, pour constituer un second et un troisième circuits électriques fermés (6, 7), de telle manière qu'au moins trois différences de phase en avance ou en retard soient produites entre les flux magnétiques qui pénètrent dans l'élément d'entraînement (4).

6. Procédé de propulsion par induction électromagnétique selon la revendication 1, dans lequel au moins un des éléments magnétiques externe et interne (2, 3) est pourvu d'au moins trois pôles magnétiques, au moins un des pôles étant pourvu d'une bobine (51) connectée électriquement en série à une source d'alimentation alternative (52) pour constituer un premier circuit électrique fermé (5), au moins un des pôles étant pourvu d'une bobine (61) connectée électriquement en série à un élément électrique (63) comprenant un condensateur, une résistance, ou la combinaison de ceux-ci, pour constituer un second circuit électrique fermé (6), de telle manière qu'au moins trois différences de phase soient produites entre les flux magnétiques qui pénètrent dans l'élément d'entraînement (4).

7. Procédé de propulsion par induction électromagnétique selon la revendication 1, dans lequel au moins un des éléments magnétiques externe et interne (2, 3) a trois pôles magnétiques pourvus chacun d'une bobine (51), les bobines étant connectées à des sources d'alimentation alternatives triphasées (53, 54, 55) pour produire trois différences de phase entre les flux magnétiques qui pénètrent dans l'élément d'entraînement (4).

8. Dispositif de propulsion par induction électromagnétique comprenant:

   - un élément magnétique externe (2);
   - un élément magnétique interne (3) disposé contigu et opposé audit élément magnétique externe;
   - au moins trois pôles magnétiques prévus sur au moins un des éléments magnétiques externe et interne et opposés à l'autre élément magnétique, formant, de ce fait, au moins un circuit magnétique fermé comportant au moins trois espaces définis par ledit élément magnétique interne et par ledit élément magnétique externe;
   - une première bobine (51) connectée à une source d'alimentation alternative (52) prévue au moins sur un pôle magnétique, la première bobine produisant lesdits circuits magnétiques fermés passant par le pôle magnétique, l'un desdits espaces associé audit pôle magnétique, l'autre élément magnétique, lesdits autres espaces et les autres pôles magnétiques;
   - une seconde bobine (61) et une troisième bobine (71) prévues, respectivement, sur les autres pôles magnétiques, lesdites seconde et troisième bobines étant connectées ou non à une source d'alimentation alternative, lesdites bobines étant susceptibles d'être connectées par un commutateur (64) à un condensateur ou à une résistance ou à un élément électrique (63) comprenant un condensateur et une résistance, lesdites bobines étant susceptibles d'être connectées électriquement par le commutateur; et
   - un élément d'entraînement unique constitué d'un matériau électriquement conducteur, disposé dans chacun des espaces entre les pôles magnétiques et l'autre élément magnétique, l'élément d'entraînement étant plus large que chacun des pôles et pourvu, à chacun de ses côtés opposés, de parties de bord (41) qui ne sont pas opposées aux espaces.

9. Dispositif de propulsion par induction électromagnétique selon la revendication 8, dans lequel l'élément magnétique interne (3) et l'élément d'entraînement (4) sont chacun sous la forme d'un cylindre et sont joints l'un à l'autre, et les pôles magnétiques (22) sont formés sur l'élément magnétique externe (2) afin de mettre en rotation l'élément magnétique interne et l'élément d'entraînement.

10. Dispositif de propulsion par induction électromagnétique selon la revendication 8, dans lequel l'élément magnétique externe (2) et l'élément d'entraînement (4) sont chacun sous la forme d'un cylindre et sont joints l'un à l'autre, et les pôles magnétiques (32) sont formés sur l'élément magnétique interne (3) afin de mettre en rotation l'élément magnétique externe et l'élément d'entraînement.

11. Dispositif de propulsion par induction électromagnétique selon la revendication 8, dans lequel les parties de bord (41, 41) aux côtés opposés de l'élément d'entraînement (4) sont séparées de celui-ci et sont connectées électriquement chacune aux extrémités opposées de celui-ci à un circuit électrique (43), une partie de commande centrale (42) de l'élément (4) étant susceptible de coulisser par rapport aux parties de bord (41, 41), de telle manière que l'élément d'entraînement soit mis en rotation ou déplacé en ligne droite.

12. Dispositif de propulsion par induction électromagnétique selon la revendication 8, dans lequel l'élément d'entraînement (4) est formé avec des fentes (44) dans une direction orthogonale à la direction de mouvement de celui-ci.

13. Dispositif de propulsion par induction électromagnétique selon la revendication 8, dans lequel les pôles (22) sont moins larges que l'élément d'entraînement (4) et sont agencés au centre de l'élément d'entraînement, et l'élément d'entraînement (4) est supporté de manière rotative ou de manière mobile en ligne droite et a une paroi d'une épaisseur et d'une largeur uniformes.

14. Dispositif de propulsion par induction électromagnétique comprenant;

- un élément magnétique externe (2);
- un élément magnétique interne (3) disposé contigu et opposé audit élément magnétique externe;
- au moins trois pôles magnétiques prévus au moins sur un des éléments magnétiques externe et interne et opposés à l'autre élément magnétique, formant de ce fait, au moins un circuit magnétique fermé comportant au moins trois espaces définis par ledit élément magnétique interne et par ledit élément magnétique externe;
- une première bobine (51) connectée à une source d'alimentation alternative (52) prévue au moins sur un pôle magnétique, la première bobine produisant lesdits circuits magnétiques fermés passant par le pôle magnétique, l'un desdits espaces associé audit pôle magnétique, l'autre élément magnétique, lesdits autres espaces et les autres pôles magnétiques;
- une seconde bobine (61) connectée à un condensateur ou à une résistance ou à un élément électrique (63) comprenant un condensateur et une résistance, prévue sur un autre pôle magnétique; et
- un élément d'entraînement unique (4) constitué d'un matériau électriquement conducteur, disposée dans chacun des espaces entre les pôles magnétiques et l'autre élément magnétique, l'élément d'entraînement étant plus large que chacun des pôles et pourvu, à chacun de ses côtés opposés, de parties de bord (41) qui ne sont pas opposées aux espaces.

15. Dispositif de propulsion par induction électromagnétique selon la revendication 14, dans lequel les pôles (22) sont moins larges que l'élément d'entraînement (4) et sont agencés au centre de l'élément d'entraînement, et l'élément d'entraînement (4) est supporté de manière rotative ou de manière mobile en ligne droite et a une paroi d'une épaisseur et d'une largeur uniformes.

16. Dispositif de propulsion par induction électromagnétique selon la revendication 14, dans lequel l'élément magnétique interne (3) et l'élément d'entraînement (4) sont chacun sous la forme d'un cylindre et sont joints l'un à l'autre, et les pôles magnétiques (22) sont formés sur l'élément magnétique externe (2) afin de mettre en rotation l'élément magnétique interne et l'élément d'entraînement.

17. Dispositif de propulsion par induction électromagnétique selon la revendication 14, dans lequel l'élément magnétique externe (2) et l'élément d'entraînement (4) sont chacun sous la forme d'un cylindre et sont joints l'un à l'autre, et les pôles magnétiques (32) sont formés sur l'élément magnétique interne (3) afin de mettre en rotation l'élément magnétique externe et l'élément d'entraînement.

18. Dispositif de propulsion par induction électromagnétique selon la revendication 14, dans lequel les parties de bord (41, 41) aux côtés opposés de l'élément d'entraînement (4) sont séparées de celui-ci et sont connectées électriquement chacune, aux extrémités opposées de celui-ci, à un circuit électrique (43), une partie de commande centrale (42) de l'élément (4) étant susceptible de coulisser par rapport aux parties de bord (41, 41), de telle manière que l'élément d'entraînement soit mis en rotation ou déplacé en ligne droite.

19. Dispositif de propulsion par induction électromagnétique selon la revendication 14, dans lequel l'élément d'entraînement (4) est formé avec des fentes (44) dans une direction orthogonale à la direction de mouvement de celui-ci.

# FIG.1a

# FIG.1b

FIG.2a

FIG.2b

FIG.2c

FIG.2d

FIG.3a

FIG.3b

FIG.3c

FIG.4a

FIG.4b

FIG.4c

FIG.5a

FIG.5b

FIG.6a

FIG.6b

## FIG.7a

## FIG.7b

# FIG.8

FIG.9a

FIG.9b

FIG.10

FIG.11a

FIG.11b

FIG.12

## FIG.13a

## FIG.13b

# FIG.14

FIG.15a

FIG.15b

FIG.16a

FIG.16b

FIG.16c

FIG.16d

FIG.16e

FIG.16f

FIG.17a

FIG.17b